# EUROPÄISCHE PATENTANMELDUNG

(11) **EP 3 647 527 A2**
(43) Veröffentlichungstag der Anmeldung: **06.05.2020**
(21) Anmeldenummer: 19196980.7
(22) Anmeldetag: 12.09.2019
(51) Int. Cl.: E06B 3/263, E06B 3/267, E06B 3/22, B29C 48/00, C08J 9/32

(54) **HOHLKAMMERPROFIL, INSBESONDERE FÜR DEN FASSADEN-, FENSTER- UND/ODER TÜRENBAU SOWIE FÜR BAUTEILE IM BEREICH DES SONNENSCHUTZES, SOWIE VERFAHREN ZUM HERSTELLEN EINES HOHLKAMMERPROFILS UND VORRICHTUNG ZUR AUSFÜHRUNG DES VERFAHRENS**

(30) Priorität: 29.10.2018 DE 102018126974
(71) Anmelder: SCHÜCO International KG, 33609 Bielefeld (DE)
(72) Erfinder: HOLZ-KURZIDIM, Sven, 06688 Weißenfels (DE); LÜNEBURG, Sebastian, 06258 Schkopau (DE)
(74) Vertreter: Dantz, Jan Henning

(57) **Zusammenfassung**

Ein Hohlkammerprofil (12, 21, 31, 41, 51), insbesondere für den Fassaden-, Fenster- und/oder Türenbau sowie für Bauteile im Bereich des Sonnenschutzes, umfassend PVChaltige Profilwände (23, 33), welche zumindest eine Hohlkammer (24, 34) begrenzen, wobei die Hohlkammer (24, 34) zur Erhöhung des Wärmedurchgangswiderstandes mit einem PVC und/oder Polyacrylat-haltigen Schaum (11, 22, 32) zumindest teilweise gefüllt ist dadurch gekennzeichnet, dass der Schaum (22, 32) als Schäumungsmittel thermisch-expandierbare Mikrosphären (10), wobei die Mikrosphären (10) zu einem Anteil von weniger als 20 Gew.% im Gemisch enthalten sind,
sowie ein Verfahren zum Herstellen eines Hohlkammerprofils (12, 21, 31, 41, 51) und eine Vorrichtung (1) zur Ausführung des Verfahrens.

## Beschreibung

Die vorliegende Erfindung betrifft ein Hohlkammerprofil nach dem Oberbegriff des Anspruchs 1 und ein Verfahren zum Herstellen eines Hohlkammerprofils nach dem Oberbegriff des Anspruchs 9, sowie eine Vorrichtung zur Ausführung des Verfahrens nach dem Oberbegriff des Anspruchs 25.

Eine bisher übliche Praxis ist es, Hohlprofile für Fenster und Türen in mehrere Kammern zu unterteilen, die die konvektiven Luftströmungen an den Innen- und Außenseiten der Konstruktionen im Einbauzustand in Gebäuden voneinander trennen. Die Kammern lassen sich gut bei der Herstellung der Kunststoffprofile durch Extrusion im kontinuierlichen Prozess erzeugen, wobei den Größen der zu schließenden Gebäudeöffnungen, den bautechnischen Anforderungen hinsichtlich Wärmedämmung, Feuchtigkeitshaushalt, Schallschutz, architektonischen Anforderungen etc. durch konstruktive Auslegungen der Profile in vielfältiger Art Rechnung getragen werden kann. Für große Rahmen- und Flügelkonstruktionen können zusätzlich Stahlprofile nachträglich eingezogen werden, um mechanischen Beanspruchungen besser gerecht zu werden, und es können bis zu dreifache Verglasungen umschlossen werden, um besonderen Wärme- und Kälte-, Licht- und Schallschutz oder auch besondere Einbruchsicherheit zu erreichen.

Kontinuierlich steigende Wärmedämmanforderungen bedingen auch für Kunststofffensterprofile einen neuen Ansatz um bessere Wärmedämmeigenschaften aufzuweisen. Die Ausbildung von Kunststoff-Hohlkammerprofilen in immer tiefere Profile mit steigender Zahl an Innenkammern in Richtung des Wärmestroms ist dabei endlich, sowohl in Hinblick auf Wirtschaftlichkeit, das Eigengewicht und dem damit verbundenen Wärmedämmzuwachs.

Die DE 10 2007 059 183 A1 offenbart ein Verfahren zur Dämmung von Hohlbauteilen, bei dem ein thermisch expandierbares Material in einen Hohlraum eingebracht wird und dann durch Erwärmen auf eine vorbestimmten Temperatur expandiert und ausgehärtet wird. Dadurch soll der Hohlraum des Hohlbauteils vollständig mit thermisch expandierbarem Material ausgefüllt werden, um eine hohe Wärmedämmung und Stabilität des Hohlbauteils zu erreichen.

In der EP 1 728 613 A1 ist ein hohles Kunststoffprofil offenbart, das mit einem Kunststoffschaum gefüllt ist. Die Herstellung erfolgt durch Koextrusion.

Die EP 1 908 576 A1 offenbart die Verwendung eines Polyvinylchlorid-Schaummaterials im Fahrzeugbau, wobei Hohlkugeln aus einem thermoplastischen Kunststoffmaterial eingesetzt werden, die eine niedrig siedende Flüssigkeit enthalten. Der so hergestellte Schaum kann als Laderaumabdeckung oder für Türinnenverkleidungen eingesetzt werden.

Die DE 10 2007 062 000 A1 offenbart eine Isolierung für ein Kältegerät mit einem Polyurethanschaum, dem Mikro-Kügelchen beigesetzt sind, die einen Hohlraum aufweisen und von einer dünnen Hülle umschlossen sind. Der Hohlraum ist dabei mit Kohlenwasserstoffen gefüllt. Der Polyurethanschaum enthält einen Anteil von 1 bis 5 Vol.-% an Mikro-Kügelchen, um das Isolationsvermögen zu verbessern.

In der vorliegenden Schrift ist es insbesondere ein Bestreben den Wärmedurchgangswert U von Fenster- und Türenkonstruktionen aus Kunststoff-Hohlprofilen dadurch zu verbessern, dass man in einem Teil der Querschnitte von Rahmen- und Flügelprofilen die Wärmeübertragung durch Konvektion vollständig durch inline eingebrachte Leichtschäume aus PVC unterbindet und dabei ein neuartiges, hochproduktives, automatisierbares und kontinuierliches Fertigungsverfahren mit nachhaltiger Rohstoffnutzung durch vollständige Rezyklierbarkeit von Fertigungsabfällen ohne Trennprozesse zur Anwendung bringt.

Bezüglich der wärmetechnischen Eigenschaften von Türen- und Fensterkonstruktionen aus Kunststoff stellen die Rahmen aus mehrfach unterteilten Hohlkammerprofilen oftmals eine Herausforderung dar. Der in der Regel für diese Anwendungen an Gebäuden verwendete Kunststoff Polyvinylchlorid (PVC) besitzt neben seinen guten mechanischen Eigenschaften für den abzudeckenden Temperaturbereich und den guten brandschutztechnischen Eigenschaften auch eine relativ niedrige spezifische Wärmeleitfähigkeit 'λ' von 0,17 W/mK. Die in den Hohlkammern stattfindende Konvektion von Luft verhindert jedoch das hohe Potenzial an Wärmedämmung durch die üblichen Wärmeschutzverglasungen vollständig auszuschöpfen. Aus diesem Grunde wurden verschiedene Verfahren vorgeschlagen, nach denen zumindest eine der Hohlkammern in den Profilen auf verschiedene Weise nachträglich mit Schaum gefüllt werden, die auch technisch in großem Umfang praktiziert werden. Durch diese werden erhebliche Verbesserungen beim Wärmeschutz erreicht, wie sie für die Erfüllung von Anforderungen an moderne Bauweisen (Niedrig-Energiebauweise, Energie-Plus-Häuser, Passivhäuser etc.) und die Erfordernisse der CO2-Einsparung im Rahmen der weltweiten Klimaschutzprogramme notwendig sind.

Eine häufig praktizierte Variante besteht darin, dem Fensterbauer zur Verbesserung von Kunststoff-Hohlkammerprofilen Wärmedämmformkörper als Einschiebe-Formkörper aus Schaummaterial dem Fensterbauer zur Verfügung zu stellen, die er optional zur Aufwertung der Wärmedämmeigenschaften in das Kunststoff-Hohlkammerprofil einschieben kann. Allerdings sind sie schwerlich und nur mit Aufwand in die Profile einschiebbar. Sie neigen dazu zu verkanten, abzubrechen oder am anderen Profilende herauszufallen.

Werksseitig eingebrachte Polyurethan-Schäume weisen letztgenannten Nachteil nicht auf, da sie mit den ausgeschäumten Hohlkammerinnenwänden vollständig verkleben. Sie sind dem Recycling von Abfällen und Verschnitten allerdings abträglich, da sie nicht zu 100 % von den PVC-Profilanteilen trennbar sind.

Den genannten Verfahren ist somit gemeinsam, dass im Nachgang zur Profilextrusion, weitgehend manuell, vorgefertigte Leichtschaumprofile aus anderen Kunststoffen (X-PS - Polystyrol) in einzelne Hohlkammern eingeschoben oder aus Reaktionsharzen (bevorzugt Polyisocyanaten) hergestellte Schaumfüllungen mittels Lanze oder durch Flüssigbefüllung eingebracht werden.

Neben dem hohen Arbeitsaufwand sind diesen Verfahren vor allem durch die Probleme bei der Recyclingfähigkeit der Verschnitte beim Fensterbau und beim späteren Recycling der Flügel- und Rahmenkonstruktionen nach Ablauf ihrer Nutzungsdauer problematisch, da in jedem Fall Schwierigkeiten bei der sicheren Materialtrennung von Rahmen- und Schaumkomponenten auftreten. Allein schon die Recyclingfähigkeit der Verschnitte beim Fensterbau ist eine Grundvoraussetzung für die ökonomisch zu rechtfertigende Fenster- und Türenherstellung. Insbesondere bei eingebrachten PU-Schäumen verbleiben, je nach Schredderprozeß bzw. verfügbarer Anlagentechnik des Recyclers, PUR-Anhaftungen an den PVC-Partikeln haften und schmälern entweder den Anteil an PVC-Gutware oder reduzieren die Reinheit des rückgewonnenen PVC-Recyclats. Beides sollte reduziert bzw. vermieden werden um eine höhere Ausbeute zu erzielen und somit umweltgerechter aber auch wirtschaftlicher zu sein.

Um diese Nachteile zumindest teilweise zu beheben wurden gemäß dem Stand der Technik verschiedene Vorschläge unterbreitet, die Füllung von einzelnen Hohlkammern mit Schaum in den Extrusionsprozess der Profile zu integrieren und damit die arbeitsaufwändigen nachträglichen Schaumbefüllungen zu vermeiden. In der WO 2009/062986 A1 wird vorgeschlagen, in Anlehnung an die Schaumbefüllung mit Reaktionsharzschäumen einen Hohlraum der Profile inline mit wärmesensitiven Reaktionsharzen auf Polyisocyantbasis oder auf Basis peroxidisch vernetzbarer, thermochemische Treibmittel enthaltender Ethylen-basierender Copolymerer (u. a. Ionomerer) im kalten, nichtreaktiven Temperaturbereich zu befüllen und anschließend durch den Wärmeinhalt der frisch extrudierten, noch schmelzeförmigen PVC-Profile die Reaktionstemperaturen der eingefüllten Schaumkomponenten zum Vernetzen und Schäumen zu starten und so die Hohlkammer mit Schaum auszufüllen. Neben den offensichtlichen Schwierigkeiten der in der Schrift nicht dargelegten Technik des Inline-Eintrags der Schaumkomponenten in die Hohlkammer und der Problematik der thermischen und zeitlichen Beherrschbarkeit von Vernetzung, Treibgasfreisetzung und Aufschäumung durch den Wärmeinhalt eines extrudierten und zwingend von außen zu kühlenden PVC-Hohlprofils, insbesondere auch bei unterschiedlich großen Hohlkammerquerschnitten, bleibt selbst bei Lösung dieser technischen Fragen das Problem, dass die Recyclingfähigkeit der Profilabschnitte mit den fest anhaftenden Reaktionsharzschäumen sehr schwierig wäre. Eine Angabe zu erreichbaren Schaumdichten nach diesem Verfahren in der ausgeschäumten Hohlkammer oder der damit verbundenen Verbesserung des Wärmedurchgangwertes U an einem derart ausgestatteten Fenster- oder Türelement wird in der Schrift nicht gemacht.

Die Schrift der EP 2 767 378 B1 schlägt vor, in einem nicht näher erläutertem Coextrusionsverfahren eine Hohlkammer eines Rahmenprofils inline mit einer Kunststoffmischung zu beschicken, die zu mindestens 25 %, bevorzugt über 30 %, aus expandierbaren Mikroballons (Alkan-gefüllte Polyacrylnitril (PAN)-Mikrohohlkugeln), sogen. Microspheres bzw. Mikrosphären, besteht und die unter Wärmeeinwirkung während des Extrusionprozesses die Hohlkammer mit einem sehr leichten Schaum auszufüllen vermag.

Als Beispiel wird ein Schaum mit einem Ethylen-Vinylacetat-Copolymeren (EVA) als Kunststoffkomponente angeführt, der eine Dichte von 0,01 g/cm³ bis 0,02 g/cm³ aufweist und eine Wärmeleitfähigkeit von 0,02 W/mK besitzt. Die einfache Nachrechnung der Volumenverhältnisse, ausgehend von einem Ausgangsdurchmesser der angegebenen Microspheres-Type von 30 µm und einem Durchmesser von 120 µm im expandiertem Zustand ergibt, dass sich das Microspheres-Volumen um das 64-fache vergrößert während das Volumen des Matrixkunststoffes konstant bleibt und vom vormals dreifachen Volumen im unexpandiertem Zustand des Gemisches (75 zu 25 Volumenanteilen) auf weniger als ein Zwanzigstel Volumenanteil im geschäumten Zustand reduziert wird. Eine Materialmischung aus über 95 % Volumenanteilen dünnhäutiger, 120 µm großer Mikrohohlkugeln und weniger als 5 % Matrixmaterial kann schwerlich einen zusammenhängenden, in irgendeiner Weise fließfähigen Schaum ergeben und im erkalteten Zustand innere oder äußere Kräfte aufnehmen. Dies ist insofern von Bedeutung, als die niedrigsiedenden Alkane im Inneren der Mikrosphären (z.B. azeotrope Gemische aus Iso-Pentan und n-Oktan) an ihrem Siedepunkt zwischen 72 °C und 100 °C kondensieren und eine erhebliche Volumenreduktion erfahren.

Wenn die umgebende Kunststoffmatrix in diesem Temperaturbereich nicht ausreichende Stabilität zum Erhalt des expandieren Volumens aufweist, kollabiert die Mischung zwangsläufig. In einer an den Enden offenen und der Umgebungsatmosphäre zugänglichen Profilhohlkammer würde das expandierte Gemisch kollabieren und bei Handhabung und Transport aus dem Profil herausfallen, da sich mit dem niedrigen Kunststoffanteil keine Formstabilität und auch kein Verbund zu den Innenwänden der Hohlkammer ausbilden kann. Für die im vorgenannten Dokument beschriebene Anwendung von PVC als Matrixkunststoff für diese Schaumfüllung, die für die Recyclingfähigkeit solcher schaumgefüllter Profile von großem Interesse wäre, gelten die o.g. Vorbehalte in noch verstärktem Maße, da die spezifische Dichte von PVC 1,41 g/cm³ beträgt und der Volumenanteil an der expandierten Mischung noch entsprechend niedriger wäre als bei dem EVA mit einer spezifischen Dichte von ca. 1,05 g/cm³.

Zudem steht ein hoher Preis für die Microspheres einer technischen Anwendung im Wege, der bei so hohem Anteil der kostspieligen Microspheres kaum eine wirtschaftliche Herstellung der auf diese Weise hergestellten Hohlkammerprofile mit partieller Ausschäumung, z. B. im Vergleich zu den üblichen Profilen mit eingeschobenem X-PS-Leichtschaum, zuließe.

Ein weiterer Vorschlag zur Ausschäumung von Fenster- und Türprofilen mit einem PVC-Schaum wird gemäß der DE 10 2011 053 882 B3 unterbreitet. Dabei wird von üblichen PVC und Blends für das Schäumen mit thermochemischen Treibmitteln ausgegangen. Wegen der begrenzten Dehnfähigkeit der PVC-Schmelze bei gleichzeitiger Diffusionsbeständigkeit gegenüber im Inneren freigesetzten Gasen sind die auf diese Weise erzeugten Extrusionsschäume auf Dichten über 0,5 g/cm³ beschränkt. Da zum Schäumen nach diesen Verfahren die Treibgase bis zum Austritt aus der Extrusionsdüse unter hohem Druck gehalten werden müssen, wird nach der Lehre dieses Dokuments das in das Innere der Hohlprofile geführte Werkzeug der Schaumschmelze in mehrere Einzeldüsen unterteilt, damit die relativ großen Querschnitte der Fenster- und Türrahmen-Profile mit Schaum im Dichtebereich bis 0,8 g/cm³ ausgefüllt werden können.

Die dadurch erzielbaren Schaumdichten sind zu hoch, um auch nur annähernd die niedrigen Wärmeleitfähigkeiten der o.g. marktüblichen Varianten von Hohlkammerprofilen mit eingeschobenen, vorgefertigten X-PS-Leichtschaum zu erreichen.

Die DE 195 31 631 A1 offenbart die Anwendung von Mikroballons als Schaumbildner. Dieser kann in einem Gewichtsverhältnis von 0,2 bis 10 Gew.% eingesetzt werden. Weiterhin offenbart die DE 195 31 631 A1 die Ausbildung eines PVC-Schaumprofils. Ein solches Profil umfasst allerdings keine festen Hohlprofilwände und Hohlkammern, sondern es handelt sich um Profile welche gänzlich aus Schaum gebildet werden, welche z.B. im Verpackungsbereich oder dergleichen eingesetzt werden können.

Den bekannten Lösungsvorschlägen zur Inline-Schaumfüllng von Fenster- und Tür-Hohlprofilen aus PVC ist gemeinsam, dass sie technisch und wirtschaftlich nicht praktikabel sind und darum auch nicht im technischen Maßstab angewendet werden.

Ausgehend von dieser Vorbetrachtung ist es die Aufgabe der vorliegenden Erfindung mittels Coextrusionsverfahren ein Hohlkammerprofil mit zumindest partieller Schaumfüllung zu schaffen, welches einen optimierten Wärmedurchgangskoeffizienten aufweist.

Die Erfindung löst die vorliegende Aufgabe durch ein Hohlkammerprofil mit den Merkmalen des Anspruchs 1 sowie durch ein Verfahren zu dessen Herstellung mit den Merkmalen des Anspruchs 9 und eine Vorrichtung zur Ausführung des Verfahrens mit den Merkmalen des Anspruchs 25.

Ein erfindungsgemäßes Hohlkammerprofil, insbesondere für den Fassaden, Fenster und/oder Türenbau sowie für Bauteile im Bereich des Sonnenschutzes, umfasst PVC-haltige Profilwände, welche zumindest eine Hohlkammer begrenzen. Auch ein Mehrkammerprofil ist denkbar, wobei ein Schaum in einer oder mehreren Hohlkammern angeordnet sein kann.

Die Hohlkammer kann mit einem PVC-haltigen Schaum gefüllt werden, wobei der Schaum eine Wärmeleitfähigkeit von vorzugsweise weniger als 0,05 W/(m^{2∗}kg) aufweist.

Alternativ zum PVC-haltigen Schaum kann auch ein Polyacrylat-Schaum, vorzugsweise ein PMMA (Polymethylmethacrylat) als Schaum genutzt werden.

Die vorgenannten Materialien behindern das Recycling von Produktionsabfällen und Altfenstern und -türen nicht oder nur in geringem Maße. Auch der Schweißprozess erfährt dadurch keine negativen Auswirkungen. Die Eckenbruchfestigkeiten werden dadurch sogar leicht erhöht.

PVC hat sich zudem im Anwendungsbereich der Fenster-, Türen- und Fassadenmittel als das bevorzugte Anwendungspolymer durchgesetzt. Es ist witterungsbeständig, wärmedämmend, schweißbar, einfach verfügbar, kostengünstig und insbesondere einfach recyclebar.

Auch für Bauteile des Sonnenschutzes, hier insbesondere Lamellen, können die erfindungsgemäßen Hohlprofile eingesetzt werden.

Es sind insbesondere auch Kunststoff-Blends für den Schaum denkbar oder auch modifiziertes PVC-U, Acrylat-basierende Kunststoffe und/oder Abmischungen aus beiden Kunststoffen.

Zudem sind im Schaum thermisch-expandierbare Mikrosphären angeordnet. Diese dienen als Expansionsmittel. Dabei handelt es sich bevorzugt als um niedrigsiedende Alkane enthaltende PAN-Mikrohohlkugeln bzw. Mikrosphären.

Die Anwendung von Mikrosphären in PVC-U unterhalb von 20 Gew.% ist bislang nicht bekannt und ist im technischen Maßstab auch nicht üblich, da PVC spezifisch selbst eine relativ hohe Diffusionsbeständigkeit gegenüber im Inneren freigesetzten Gasen besitzt und sich dadurch, üblicherweise mit thermochemisch reaktiven Treibmittelzubereitungen, unter Verwendung spezieller PVC-Typen mit hoher Schmelzedehnfähigkeit zu Schaumdichten bis ca. 0,5 g/cm3 zu Schaumplatten, Paneelen, Dreischichtrohren etc. verarbeiten lässt.

Weitere vorteilhafte Ausgestaltungen der Erfindung sind Gegenstand der Unteransprüche.

Zusätzlich kann eine schäumfähige Schmelze vor der Ausbildung des Schaums mit einer thermochemisch-reagierenden Treibmittelzubereitung, vorzugsweise auf Basis von Natriumhydrogencarbonat (Bicarbonat), ggf. in Abmischung mit aktiviertem Azodicarbonsäurediamid (ADC), ergänzt werden. Auch der unterstützende Einsatz anderer thermochemischreagierender Treibmittel ist möglich.

Die bevorzugte Mikrosphären-Konzentration kann dabei vorteilhaft zwischen 3 Gew.% und 20 Gew.%, bevorzugt zwischen 5 Gew.% und 15 Gew.%, liegen, bezogen auf das eingesetzte Gemisch, welches schaumfähig ist und daher nachfolgend auch als schaumfähiges Gemisch bezeichnet wird.

Das Expansionsverhalten der PVC- Schmelzen kann zusätzlich durch gleichzeitige Verwendung 0,5 % bis 3 % geeigneter, thermochemisch reaktiver Treibmittelkombinationen, z.B. auf Basis von Natrium-hydrogen-carbonat (Bicarbonat), Estern der Zitronensäure oder modifiziertes Azo-di-carbonsäure-di-amid (ADC), gestützt werden.

Dabei wird in Kauf genommen, dass die Zwickelhohlräume zwischen den expandierten Microsphären nicht vollständig mit der Matrix-PVC-Schmelze gefüllt werden. Der Schmelzeanteil an der Schaummischung wird jedoch so hoch beibehalten, dass eine sichere Verbindung mit den Hohlkammerwänden aus kompakten PVC des Außenprofils insbesondere während der Extrusion und unmittelbar nach dem Austritt aus dem Extrusionswerkzeug bis in die Vakuumkalibrierung des Profils erfolgen kann.

Der Schaum kann insbesondere als Schaumsteg innerhalb der Hohlkammer ausgebildet sein.

Der Schaum kann vorzugsweise als Leichtschaum mit einer Dichte zwischen 0,08 g/cm³ und 0,3 g/cm³, bevorzugt zwischen 0,1 g/cm³ und 0,25 g/cm³ ausgebildet sein. Neben den hervorragenden Dämmeigenschaften dieses Schaumes hat er aufgrund seiner geringen Dichte auch Vorteile beim Transport der Hohlkammerprofile und der daraus resultierende Produkte (Fenster, Türen, usw.)

Insbesondere bei PVC-Hohlkammer Profilen mit mehreren Hohlkammern kann die Trennung der konvektiven Luftströme in Hohlkammern an den Innen- und Außenseiten der Rahmenprofile durch den Ersatz eines oder mehrerer der mittleren Stege, die zur Unterteilung der Hohlprofile in voneinander getrennte Kammern angebracht werden, durch einen breiten Steg aus Schaum erfolgen, der annähernd die gleiche oder eine größere Querschnittsfläche besitzt wie die dadurch ersetzte bzw. durch den Schaum ausgefüllte Hohlkammer.

Innerhalb einer Hohlkammer kann der Schaum vorzugsweise als Schaumkörper vorgesehen sein.

Das jeweilige Matrixmaterial des Schaumkörpers kann im expandierenden Stadium mit den angrenzenden Innenwänden des PVC-Rahmenprofils während des Herstellprozesses materialschlüssig ohne zusätzliches Bindemittel verbunden werden. Die in den Hohlkammern vorgesehenen Schaumkörper können eine so hohe Druckfestigkeit besitzen, dass sie die Funktion der durch sie ersetzten Stege und weitere konstruktiv tragende Funktionen übernehmen können.

Somit übernimmt der Schaumkörper neben der Wärmedämmung auch eine Stützfunktion innerhalb des Hohlprofils.

Es ist insbesondere vorteilhaft, dass die Hohlkammer im Querschnitt einen ersten Teilbereich aufweist, in welchem die PVC-haltigen Profilwände stoffschlüssig mit dem Schaum verbunden sind und einen zweiten Teilbereich, in welchem kein Stoffschluss zwischen der PVC-haltigen Profilwand, welche die Hohlkammer begrenzt, und dem Schaum vorhanden ist, so dass der Schaum nur an der PVC-Wand anliegt oder besonders bevorzugt von dieser beabstandet ist.

Der erste Teilbereich könnte beispielsweise zwei zur Hohlkammer gegenüber liegende Seiten zweier Profilwände sein. Stoffschluss, auch Materialschluss genannt, bedeutet, dass eine chemische Bindung zwischen dem Schaum und der PVC-Wand vorliegt. Nahtlos heißt in diesem Kontext, dass kein zusätzliches Adhäsionsmittel eingesetzt wurde. Dieses würde eine Klebenaht darstellen. Ein Materialübergang z.B. von Polyacrylat-Schaum oder von PVC-Schaum in das PVC-Material der Profilwand ist dabei als ein solcher nahtloser Übergang zu verstehen. Der Materialübergang ist somit klebstofffrei.

Der Schaum kann in den Eckbereichen der Hohlkammer stoffschlüssig mit den Profilwänden verbunden sein und in Teilbereichen zwischen den jeweiligen Eckbereichen von den Profilwänden beabstandet sein. Der Freiraum zwischen dem Schaum und den Profilwänden kann zum Volumenausgleich, z.B. bei der Kontraktion des Schaumes, genutzt werden.

Alternativ oder zusätzlich kann der Schaum einen Freiraum zum Volumenausgleich umschließen, so dass sich ein Hohlraum innerhalb des Schaumes bildet. Das Einfügen des Freiraumes kann während des Herstellprozesses erfolgen..

Die Hohlkammer kann durch den Schaum teilbefüllt bzw. partiell ausgefüllt ausgebildet sein, so dass der unbefüllte Bereich der Hohlkammer eine Schaumkontraktion ausgleicht.

Die Mikrosphären können jeweils eine Kapsel aus einem thermoplastischen expandierbaren Polymer umfassen, sowie ein Füllmaterial. Bei Temperatureintrag expandieren die Mikrosphären. Typische Beispiele hierfür sind Mikrosphären wie sie unter der Handelsbezeichnung "Expancel" vertrieben werden.

Ein erfindungsgemäßes Verfahren zum Herstellen eines Hohlkammerprofils, insbesondere eines vorbeschriebenen erfindungsgemäßen oder vorteilhaften Hohlkammerprofils, umfasst eine Coextrusion, wobei im Rahmen dieser Coextrusion ein Schaum und Wände eines Hohlkammerprofils ausgebildet werden.

Zur Ausbildung der Wände, also der vorgenannten Profilwände, wird ein PVC-haltiger erster Ausgangsstoff verwendet.

Zur Ausbildung des Schaumes wird ein Gemisch, vorzugsweise in Form einer schäumfähigen Schmelze, verwendet, welches zumindest einen PVC- oder Polyacrylathaltigen zweiten Ausgangsstoff als Matrixpolymer und Mikrosphären als Schaumbildner umfasst.

Die Kombination der vorgenannten Materialien unter Verwendung von Mikrosphären ist derzeit so nicht bekannt. Sie weisen neben einer gleichmäßigen Schaumstruktur mit hohen Dämmwerten auch eine besonders gute Wiederaufarbeitung im Recylingfall auf.

Die Mikrosphären sind erfindungsgemäß zu einem Anteil von weniger als 20 Gew.% im Gemisch und auch im daraus gebildeten Schaum enthalten. Vorzugsweise jedoch beträgt der Anteil der Mikrospären im Gemisch jedoch zwischen 3 Gew.% und 15 Gew.%, bevorzugt zwischen 5 Gew.% und 12 Gew.%.

Vorteilhafte Ausgestaltungen des Verfahrens sind Gegenstand der Unteransprüche.

Bevorzugt kann das erfindungsgemäße Verfahren wie folgt in einer Vorrichtung zur Ausführung des Verfahrens umgesetzt werden:
i) in einem beheizbaren Hauptextruder der PVC-haltige erste Ausgangsstoff im festen Zustand eingefüllt wird;
ii) der PVC-haltige erste Ausgangsstoff während der Förderung mittels einer Förderschnecke des Hauptextruders in Richtung einer Düse aufgeschmolzen und komprimiert wird;
   Die Düse kann Teil des Hauptextruders sein. Sie kann insbesondere als Extrusionswerkzeug ausgebildet sein. Die Düse kann im Rahmen der vorliegenden Erfindung beheizbar sein und insbesondere auch ein endständiger Abschnitt einer temperierbaren Rohrleitung sein.
iii) der aufgeschmolzene PVC-haltige erste Ausgangsstoff durch die Düse zu einem Hohlkammerprofil ausgepresst wird;
iv) ein PVC- oder Polyacrylathaltiger zweiter Ausgangsstoff sowie die Mikrosphären in einen Schaumextruder eingefüllt und zu einer schäumbaren Schmelze geschmolzen wird;
v) die schäumbare Schmelze in Richtung der Düse gefördert wird;
vi) das schäumbare Schmelze in eine Formkammer der Düse gefördert wird, in welcher ein teilweises oder vollständiges Aufschäumen der schäumbaren Schmelze unter Ausbildung des Schaumes erfolgt;
vii) Ausgabe des Schaumes in das Innere der Hohlkammer unter Ausbildung einer zumindest bereichsweisen stoffschlüssigen Verbindung mit den Profilwänden des Hohlkammerprofils.

Die maximale Expansion der eingesetzten Mikrosphären kann vorteilhaft zwischen 180 °C und 200 °C liegen. In diesem Temperaturbereich, also z.B. bei einer Extrusionstemperatur ab 150°C an der Düsenwandung einer Formkammer, kann zugleich eine optimale Einstellung des Matrixpolymers für den Extrusionsprozess erfolgen, so dass der Aufschäumeffekt der Mikrosphären während der Extrusion besonders wirksam ist.

Der mittlere Durchmesser der Mikrosphären kann bei maximaler Expansion durchschnittlich zwischen 80 µm und 140 µm, bevorzugt zwischen 100 µm und 130 µm betragen. Meist variiert die Wandstärke geringfügig, daher kann es zu einer Streuung der maximalen Expansion kommen. Der mittlere Durchmesser bezieht sich auf einen Mittelwert aller Mikrosphären-Durchmesser bei maximaler Expansion.

Das schaumfähige Gemisch kann unterstützend ein thermochemisch-reagierenden Treibmittel, vorzugsweise ein Hydrogencarbonat, insbesondere ein Natriumhydrogencarbonat, einen Ester einer organischen Säure, insbesondere einen Zitronensäureester und/oder ein modifiziertes Azo-di-carbonsäure-di-amid (ADC), aufweisen. Letzteres kann z.B. eine Abmischung mit aktiviertem Azo-di-carbonsäure-di-amid umfassen.

Das schaumfähige Gemisch kann vorteilhaft zu 0,5 % bis 5 Gew.%, bevorzugt 1% bis 3 Gew.% eines thermochemisch-reagierenden Treibmittels, vorzugsweise eines der vorgenannten thermochemisch-reagierenden Treibmittel oder eines Gemisches mehrerer dieser Treibmittel aufweisen.

Das schaumfähige Gemisch kann zudem einen Weichmacher, vorzugsweise ein Phthalat, Adipat und/oder Citrat und/oder ein Gleitmitteladditiv, vorzugsweise ein Siloxan, Stearat, Carboxylat und/oder ein Olefin, insbesondere ein Olefin-Copolymer, zur Einstellung der Schmelzviskosität und zur Dehnbarkeit des Gemisches aufweisen.

Der erste und der zweite Ausgangsstoff können jeweils zumindest zu 80 Gew.% aus einem Hart-PVC gebildet sein. Es ist auch möglich dass entweder erste oder der zweite Ausgangsstoff oder beide Ausgangsstoffe zu 95 Gew.% Hart-PVC gebildet sind.

Der erste und der zweite Ausgangsstoff können jeweils aus Hart-PVC gebildet sein. Der zweite Ausgangsstoff kann Hart PVC ggf. unter Zugabe der vorgenannten Additive gebildet sein.

Das Coextrusionsverfahren kann vorteilhaft mittels einer Vorrichtung mit einem Hauptextruder ausgeführt werden, welcher eine Düse aufweist, die entlang einer Extrudat-Austrittsseite, an welcher die Wände ausgebildet werden, eine Formkammer aufweist, in welcher der Schaum gebildet wird, so dass in Austrittsrichtung der Schaum vor den Wänden aus der Düse ausgegeben wird.

Der Schaum kann auch nach dem Austritt aus der Düse noch innerhalb der Hohlkammer nachexpandieren.

Somit kann eine Schaumbildung aus der schäumfähigen Schmelze während und unmittelbar nach dem Verlassen des Extrusionswerkzeugs, also insbesondere während und unmittelbar nach dem Verlassen der Düse, erfolgen.

Eine Plastizierung und Homogenisierung des Gemisches kann in einem benachbart zum Hauptextruder angeordneten Co-Extruder erfolgen, wobei die Zuführung des schäumfähigen Gemisches als Schmelze in die Hohlkammer des kompakten Außenprofils durch eine temperierte Schmelzeleitung in das Extrusionswerkzeug des Hauptextruders erfolgt und wobei diese Schmelzeleitung in der Formkammer für die schäumfähige Schmelze endet, die die Querschnittsgeometrie der auszuschäumenden Hohlkammer oder eines Schaumsteges verkleinert aufweist.

Die die Querschnittsgeometrie der Hohlkammer oder des Schaumsteges abbildende Formkammer kann am Ende der Schmelzeleitung einen hohlraumbildenden Verdrängerkörper besitzen, den die Schmelze unmittelbar vor dem Schäumprozess umfließt und der die Schmelze dabei teilt, so dass die zur Dehnung erforderlichen maximalen inneren Fließwege im Schaumschmelzequerschnitt während des Expandierens durch Aufteilung des Schaumschmelzestromes verkürzt werden.

Dabei kann der Verdrängerkörper, die Fließwege in der Kunststoffschmelze bei der Ausschäumung größerer Querschnitte verkürzen, also die Ausschäumung von Querschnitten zu ermöglichen, für die die maximale Querexpansion der schäumenden Schmelze nicht ausreicht.

Das schäumfähige bzw. schaumfähige und in der Formkammer vorgeformte Gemisch kann vorteilhaft als Schmelze frei in die zur Extrudat-Austrittsseite hin offene Hohlkammer des Hohlkammerprofils eintreten, den Schaum, insbesondere als Schaumsteg, durch Expansion ausbilden und sich dabei zumindest an zwei vorzugsweise gegenüberliegenden Innenflächen der Profilwandung, welche nachfolgend auch als Rahmeninnenflächen bezeichnet werden, anlegen und mit diesen unlösbar stoffschlüssig verbindet, insbesondere verschmilzt und an mindestens einer Seite der Hohlkammer ohne Begrenzung bleibt, so dass eine Volumenausgleich entlang dieser Seite erfolgen kann.

Bevorzugt ist das Hohlkammerprofil nach dem erfindungsgemäßen Verfahren hergestellt. Allerdings ist das Hohlkammerprofil mit seinen Eigenschaften auch unabhängig von seiner Herstellungsweise geschützt und damit erfindungsgemäß.

Bevorzugt kann die Hohlkammer lediglich bereichsweise mit dem PVC-haltigen Schaum gefüllt sein und einen unausgefüllten Freiraum aufweisen.

Das Coextrusionsverfahren kann mittels einer Vorrichtung ausgeführt werden, welche eine Düse aufweist, die entlang einer Extrudat-Austrittsseite, an welcher die Wände ausgebildet werden, eine Ausnehmung aufweist, in welcher der Schaum gebildet wird, so dass in Austrittsrichtung der Schaum vor den Wänden aus der Düse ausgegeben wird. Durch die Vorab-Ausbildung des Schaumes, welcher ggf. innerhalb der Hohlkammer noch nachschäumen bzw. weiter expandieren kann, können teilgefüllte Schaumkammern mit strukturierten Schäumen in einem Coextrusionsprozess realisiert werden.

Besonders bevorzugt wird vorgeschlagen Mikrosphären mit einem solchen Anteil in leicht fließende PVC-Blends, bevorzugt mit K-Wert des PVC's kleiner 60, und zusätzliche, über die üblichen, als Stabilisatorpakete handelsübliche Stabilisierungs- und Gleitmittelkomponenten hinaus, die Plastifizierung fördernde und die Schmelzedehnbarkeit verbessernde Additive einzumischen, so dass unter der Temperatureinwirkung im Extrusionsprozess eine Expansion in die Dichtebereiche zwischen 0,1 g/cm3 und 0,25 g/cm3 erfolgen kann.

Als zusätzliche, die Plastizierung im Schaumschmelze-Extruder und die Schmelzedehnbarkeit beim Expandieren fördernde Additive, können die als Weichmacher bekannten Ester einer Vielzahl organischer Säuren wie der Phthalsäuren (z.B. Di-iso-nonyl-phthalat und andere), der Zitronensäure (z.B. Tri-butyl-acetyl-citrat) und/oder der Benzoesäure, verwendet werden, ebenso relativ kurzkettige Polymethylmethacrylate (z.B. weniger als 30 C-Atome), wie sie z.B. als Additive für die PVC-Folienproduktion üblich sind, aber auch PVC partiell lösende Substanzen, wie z.B. 1-Methoxy-2-(2-methoxy-ethoxy-methoxy)ethan, zu Anteilen von bevorzugt 2 bis 5 Gew.%, bezogen auf das gesamte schäumfähige Blend, zugesetzt werden.

Um die Förderung dieses Schmelzestromes zu verbessern und um den Rückstau der Schmelze auf dem relativ langen Fließweg bis in das Extrusionswerkzeug des Hauptextruders und den damit ggf. verbundenem überhöhten Druckaufbau im Schaumschmelze-Extruder zu verhindern, können als weitere zusätzliche Additive äußere Gleitmittel z.B. Wache auf Ethylen- und/oder Ethylen-Copolymer-Basis, Propylen-Basis, auf Basis von Amidestern von Kohlenwasserstoffsäuren mit zehn und mehr C-Atomen in der Hauptkette oder auf Basis organischer Silikonverbindungen, z.B. mittelmolekulares Poly-di-methyl-siloxan oder Dimethyl-Methyl(propyl (polyethylenpolypropylen-oxid)acetat)-Siloxan, vorzugsweise zu Anteilen von bevorzugt 0,1 % bis 1 Gew.%, bezogen auf das gesamte schäumfähige Blend, zugesetzt werden.

Weiterhin erfindungsgemäß ist eine Vorrichtung zur Ausführung des erfindungsgemäßen Verfahrens wobei die Vorrichtung einen Hauptextruder zur Ausbildung eines Hohlkammerprofils und einen Schaumextruder aufweist und wobei die Vorrichtung eine Düse aufweist mit einer Formkammer wobei eine Schmelzeleitung vom Schaumextruder in die Formkammer führt, wo sie in einer Ausgabeöffnung mündet und wobei Extrusionskanäle vorgesehen sind, welche sich vom Hauptextruder in die Düse erstrecken, wobei die Extrusionskanäle Ausgabeöffnungen aufweisen zur Extrusion eines Hohlkammerprofils in der Düse, wobei die Ausgabeöffnungen der Extrusionskanäle in Extrusionsrichtung der Ausgabeöffnung der Schmelzeleitung nachgeordnet sind. Die Extrusionsrichtung und die Austrittsöffnung sind im Rahmen der vorliegenden Erfindung synonym zu verstehen.

Durch die Formkammer und deren Anordnung bezüglich der Extrusionskanäle kann eine Schaumbildung vor der eigentlichen Hohlprofilbildung erreicht werden, wobei der Schaum innerhalb der Hohlkammer noch nachexpandieren kann.

Vorteilhafte Ausgestaltungen der Erfindung sind Gegenstand der Unteransprüche.

Die Vorrichtung kann vorteilhaft zumindest zwei Betriebsmodi aufweisen, wobei in einem ersten der beiden Betriebsmodi ein konventionelles, Hohlprofil aus kompaktem PVC herstellbar ist und wobei in einem zweiten der beiden Betriebsmodi ein teilweise oder vollständig ausgeschäumtes Hohlprofil herstellbar ist. Dadurch können zwei Typen von Hohlprofilen vorteilhaft mit einer einzigen Vorrichtung realisiert werden.

Weitere Vorteile, Merkmale und Einzelheiten der Erfindung ergeben sich aus der nachfolgenden Beschreibung, in der ein Ausführungsbeispiel der Erfindung anhand der Zeichnung näher erläutert wird. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen.

Es zeigen:
- Fig. 1: Vorrichtung zur Herstellung eines zumindest teilweise ausgeschäumten Hohlkammerprofils;
- Fig. 2: erste Variante eines erfindungsgemäßen zumindest teilweise ausgefüllten Hohlkammerprofil;
- Fig. 3: zweite Variante eines erfindungsgemäßen Hohlkammerprofils;
- Fig. 4: dritte Variante eines erfindungsgemäßen Hohlkammerprofils;
- Fig. 5: vierte Variante eines erfindungsgemäßen Hohlkammerprofils; und
- Fig. 5b: Abwandlung der Fig. 5 als weitere erfindungsgemäße Variante.

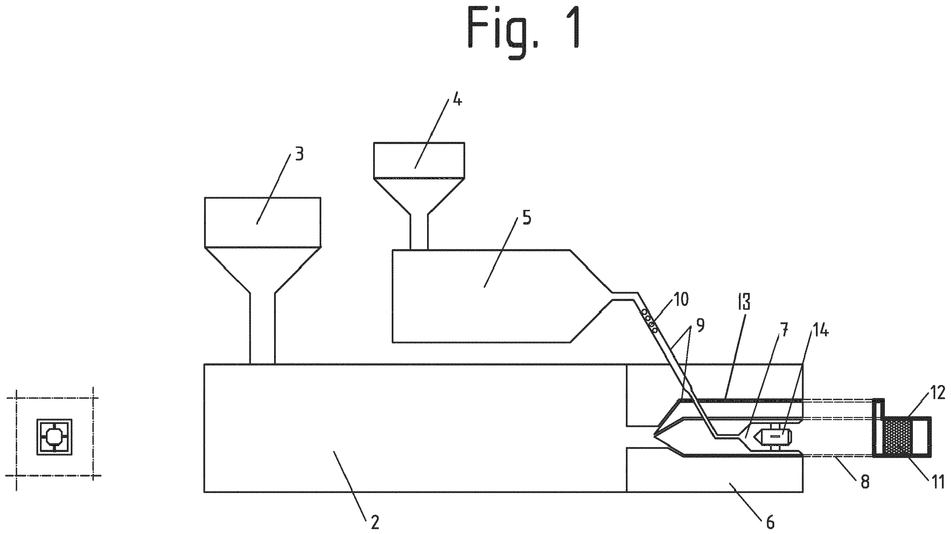

Fig. 1 zeigt eine Vorrichtung 1 zur Herstellung eines ausgeschäumten Hohlkammerprofils 12. Die Vorrichtung 1 weist einen Hauptextruder 2 zur Ausformung eines Hohlkammerprofils beispielsweise für einen Fassaden-, Fenster- oder Türrahmen auf. Das Hohlkammerprofil umfasst massive Kunststoffwände. Es ist auch möglich in analoger Weise faserverstärktes Kunststoffmaterial oder metallpartikelhaltiges Kunststoffmaterial zu verarbeiten zu entsprechenden Hohlkammerprofilen durch Extrusion auszubilden.

Es ist auch möglich das extrudierte Hohlkammerprofil als einen wärmedämmenden Einsatz in ein Metall-Hohlkammerprofil auszugestalten, wobei das Metall-Hohlkammerprofil beispielsweise als Fassaden, Tür- oder Fensterprofil einsetzbar ist.

Der Hauptextruder 2 wird mit einem ersten Ausgangsstoff 3, vorzugsweise mit einem ein PVC-Material befüllt. Dieser Ausgangsstoff ist erfindungsgemäß ein PVC-Material, ein PVC-Copolymer oder ein Material, z.B. ein Polymerblend, umfassend zumindest 35 Gew.% PVC. Insgesamt ist im ersten Ausgangsstoff zu 35 Gew.% Polymer enthalten, welches eine Vinylchlorid-Monomereinheit aufweist. Dieser Ausgangsstoff wird nachfolgend als ein PVC-haltiger Kunststoff bezeichnet. Ggf. können in dem vorgenannten PVC-haltigen Kunststoff Additive oder Zuschlagstoffe enthalten sein, wie z.B. Antioxidatien, Dispergiermittel, Modifikatoren zur Verbesserung der Kerbschlagzähigkeit und/oder der Schmelzviskosität, mineralische Füllstoffe, Thermostabilisatoren und/oder Farbstoffe von insgesamt bis zu 65 Gew.% enthalten sein.

Die Vorrichtung weist zudem einen Coextruder bzw. Schaumextruder 5 auf. Dieser Schaumextruder 5 wird mit einem zweiten Ausgangsstoff 4, der schäumfähigen PVC- oder Acrylat Pulvermischung, ggf. einer schäumfähigen Granulatmischung, befüllt.

Alternativ dazu können die Expansionsmittel, bestehend aus Mikrosphären und ggf. einer chemischen Treibmittelzubereitung, der zum Schäumen vorgesehenen Mischung 4 auch über eine Dosiervorrichtung als Granulat-Masterbatch zugeführt werden.

Der Hauptextruder 2 besitzt zur Ausbildung eines Hohlkammerprofils, bestehend aus äußerem Rahmen und inneren Trennstegen zur Bildung von Hohlkammern, ein beheizbare Düse 6 mit mehreren Extrusionskanälen 13, wobei diese Düse 6 insbesondere als Extrusionswerkzeug ausgebildet sein kann. Das Extrudat 3 verlässt die Extrusionskanäle 13 in Gestalt eines Extrudats 8 in Form eines Hohlkammerprofils.

Die Zuführung der schäumfähigen Schmelze erfolgt über den zweiten Schaumextruder 5 neben/über dem Hauptextruder 2 mit einer beheizten Schmelzeleitung 9 in die Düse 6, welche u.a. Dorne zur Ausbildung der Hohlkammern aufweist. In einen, ggf. mehreren Dornen, mündet die Schmelzeleitung 9, durchdringt diese/n und endet in der Formkammer 7, in der die ungeschäumte Schmelze 4 auf die Geometrie des zu schäumenden Querschnitts 11 vorgeformt wird.

Um die temperatursensitiven Mikrosphären ohne Vorexpansion sicher in der plastifizierten Kunststoffschmelze 3 zu verteilen und in das mit üblichen Extrusionstemperaturen um die 190 °C beheizte Profilwerkzeug 6 zu bringen, erfolgt die Plastizierung des speziell dazu mit Additiven eingestellten Blends 3 bei niedrigen Temperaturen unter 160 °C an den Zylinderzonen des Coextruders 2 und unter 150 °C Massetemperatur.

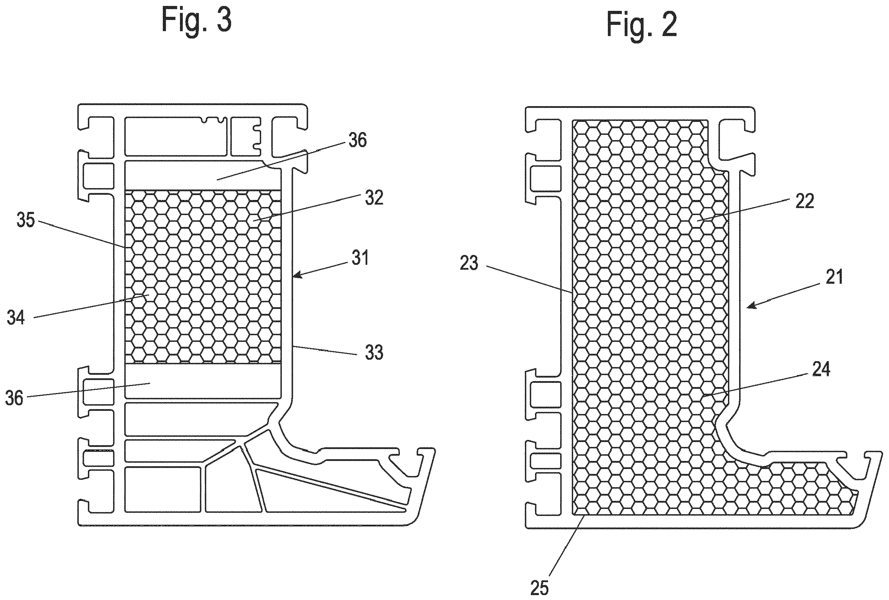

Der auszuschäumende Anteil 34 gem. Fig. 3 des Hohlraumes in den Kammerprofilen 33 wird so ausgeführt, dass die üblichen vertikalen Begrenzungsstege zur Ausbildung einer separaten Hohlkammer zwischen den Kammern 37 und 38 für die innere und äußere Konvektion in den Tür- und Fensterrahmen-Profilen ganz oder teilweise weggelassen und durch den sich bildenden, die dann entsprechend größere Hohlkammer 36 teilweise ausfüllenden Schaumkern, ersetzt werden. Das expandierte Schaumprofil 11 übernimmt damit auch die Funktion der sonst an dieser Stelle vorhandenen Stege und wird selbst zum Steg mit großem Querschnitt innerhalb der umgebenden großen Hohlkammer 36.

Bislang bekannte Verfahren zur Ausschäumung von PVC-Hohlkammerprofilen zur mittels Coextrusion gehen davon aus, dass ein durch kompakte Profilanteile umschlossener Hohlraum im Inneren der Rahmenprofile vollständig ausgeschäumt wird. Bei der technischen Umsetzung dieser Verfahrensweise ergibt sich jedoch das Problem, dass die Ausschäumung der gesamten Querschnittsflächen, insbesondere von Ecken und die Dehnfähigkeit der Schmelze übersteigende Querschnittsanteile, nur durch Überdruck auf den expandierenden Schaum erreicht werden kann. Das reduziert nicht nur das erreichbare Schaumvolumen insgesamt, sondern führt auch zu großen Problemen bei der Einstellung von gleichen Extrusionsgeschwindigkeiten des äußeren kompakten Rahmenprofils und des inneren Schaumschmelzeflusses und damit zu einem schwierig kontinuierlich störungsfrei einzustellenden, funktionierenden Extrusionsregime. In den nicht ausgeschäumten Hohlräumen der abgeschlossenen Kammern mit dem Schaum entsteht ständig oder frequenziell wechselnd starker Unter- oder Überdruck, der die Qualität der Oberfläche des äußeren Rahmenprofils bezüglich ihrer Ebenheit stark beeinflussen kann, zum Überdruck im Coextruder 5 oder zum Abriss des extrudierten Profils vor der Kalibrierung führen kann.

Da Schäume beim Erstarren der Matrixkunststoffe, und bei expandierten Mikrosphären zusätzlich nach Unterschreitung der Kondensationstemperaturen der eingeschlossenen Alkane, bei zunehmendem Schäumgrad durch höhere Microspheres-Anteile immer stärker kontrahieren, also ihr Volumen reduzieren, neigen sie dazu, sich von den umgebenden kompakten Deck- und Seitenwänden zu lösen und nach Abkühlung des coextrudierten Hohlkammerprofils nur noch partiell anzuhaften und ggf. sogar komplett abgelöst in der Hohlkammer zu liegen. Damit können sie ihre Funktionen zur Erhöhung des Wärmedurchgangswiderstandes und zur mechanischen Stabilisierung von derart ausgeführten Tür- und Fester-Hohlprofilen nicht oder nur in stark beschränktem Umfang erfüllen und die Übernahme einer tragenden Funktion nicht mehr gewährleistet.

Das freie, ungehinderte Aufschäumen zu niedrigen schaumdichten und die Kompensation des Unterdruckes im Schaum während des Abkühlens sind damit wesentlich für eine technisch anwendbare Lösung der Zielstellung. Die erfindungsgemäße Lösung dieser Schlüsselprobleme erfolgt dadurch, dass zuerst die Expansion des Leichtschaums und anschließend die Volumenreduzierung des Schaums durch das Ein- und Ausströmen von Umgebungsluft in das Profil während der Prozessabfolge ab dem Extrusionswerkzeug ermöglicht wird.

Bei der vorgeschlagenen vorteilhaften Variante der freien Schäumung in einen größeren Hohlraum ohne vertikale begrenzende Stege kann das Schaumvolumen durch Einstellung der zugeführten Schmelzemasse, der Geometrie einer oder mehrerer Vorformkammern vor dem Austritt der schäumfähigen Schmelze in den anteilig auszuschäumenden Hohlraum und des Schäumgrades in Abhängigkeit von Expansionsmittelkonzentration und Fließ-/Dehnfähigkeit der Schmelze, eingestellt werden.

Analog zum freien Schäumen nach Außen innerhalb des Rahmenproifls können freies Schäumen zur Erreichung der maximalen Schaumexpansion und ungehinderte Schaumkontraktion beim Kondensieren der Alkane in den Mikrosphären dadurch gewährleistet werden, dass in der Vorformkammer für die Schaumschmelze am Extrusionswerkzeugaustritt ein Verdrängerkörper angeordnet wird. Dieser wird in der Vorformkammer vor dem Aufschäumen der Schmelze umflossen und bildet im Inneren des Schaumschmelzequerschnittes einen Hohlraum bzw. Freiraum aus, in den hinein die Schaumexpansion erfolgen kann, ebenso wie nach außen in Richtung der Innenwände des Rahmenprofils, mit denen der Schaum verschmilzt. Dieser innere Hohlraum im Schaumquerschnitt bleibt in Form eines Loches oder Schlitzes über den gesamten Abkühlprozess und auch im extrudierten Fenster- oder Türprofil erhalten. Er ermöglicht die Kompensation des Unterdruckes beim Kontrahieren des Schaums in der Abkühlphase unter Druckausgleich zum Atmosphärendruck, ohne dass der Schaum von den Innenwänden des Rahmenprofils gelöst wird und ohne dass der Schaum über seinen Querschnitt reißt und undefinierte Vakuolen ausbildet.

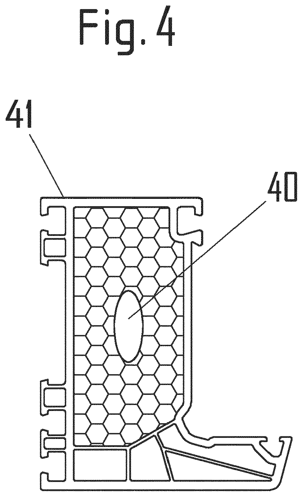

Dies ist in einer Variante eines Hohlkammerprofils 41 in Fig. 4 dargestellt. Hier erkennt man den Freiraum 40.

Da das Profil nach vorne zur Abzugs- und Kalibrierseite hin offen ist, erfolgt das Schäumen immer gegen Umgebungsdruck und ohne die Gefahr der Bildung abgeschlossener Kammern mit Unter- oder Überdruck innerhalb des Rahmenprofils. Der geometrisch z.B. rechteckig vorgeformte Schaumstrang kann frei im Inneren des fließenden Hohlprofils aufschäumen und sich an die inneren oberen und unteren Flächen des Rahmenprofils anlegen und dort mit dem ebenfalls noch schmelzeförmigen PVC verbinden. Die zwangsläufig eintretende Volumenkontraktion beim Erkalten des Schaums wird durch die frei liegenden Seiten- oder Innenflächen der Schaumprofile im Inneren der Hohlkammern aufgenommen und kompensiert, ohne den Verbund an den Ober- und Unterseiten am Rahmenprofil zu beeinträchtigen.

Die räumliche Anordnung eines nach außen geschäumten Schaumsteges im Hohlkammerprofil kann durch in die Kammer ragende, kurze Führungselemente, gebildet aus der umgebenden Kompaktschmelze, erfolgen, die z.B. anstelle der vormaligen dünnen Vertikalstege platziert sein können. Im Fall der zusätzlich nach innen erfolgten Schaumexpansion über einen Verdrängerkörper mit verbleibender Schaum-Kontraktionsöffnung kann die Form dieser Öffnung bevorzugt schlitzförmig und vertikal angeordnet werden, um mit diesem Hohlraum möglichst wenig freie Wärmedurchgangsstrecke im Inneren des Hohlprofils zu generieren.

In bestimmten Fällen, z.B. wenn besonders niedrige Schaumdichten unter 0,15 g/cm³ für einen Schaumsteg zur Anwendung kommen, kann es erforderlich sein, das partiell offenzellige Leichtschaumprofil 11 im Inneren der Hohlkammer 36 vor dem Feuchtehaushalt der verbliebenen Hohlräume der Kammer 36 zu schützen. Für diese Anforderung wird vorgeschlagen, einen oder zwei Vertikal-Kammerstege 14 gemäß Fig. 4 beizubehalten, die konstruktiv so dünn ausgelegt werden, dass sie unmittelbar nach Verlassen des Extrusionswerkzeuges 6 während der Expansionsphase der Schaumschmelze 11 deren Volumenanspruch durch Dehnung nachgeben können und mit dem Schaum verschmelzen. Während der Kontraktionsphase des Schaums können sie dann aufgrund ihrer dimensionsbedingten Flexibilität die Schrumpfbewegung des Schaums mit vollziehen und entsprechend zurückstellen, ohne dass sich der Schaum ablöst. Um ein Abreißen der dünnen Stege 14 vom Außenprofil 31 während der Dehnungsbeanspruchung durch den expandierenden Schaum zu vermeiden, kann die Anbindung an das Außenprofil durch eine radiale Verbreiterung der Stegwände in diesen Bereichen erfolgen. Gleichzeitig wird dadurch vermieden, dass der sich ausbildende Schaum rechtwinklige Ecken des Kammerprofils nicht ausfüllen kann.

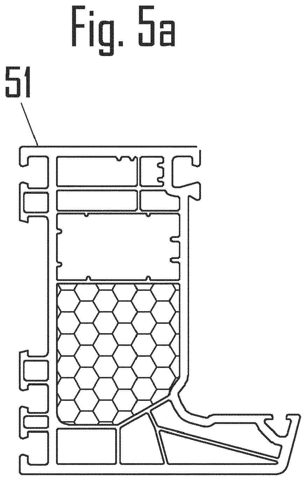

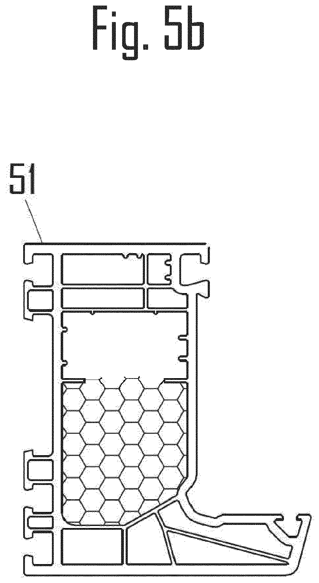

Die radiale Verbreiterung der Stege in den Eckbereichen ist in einer Variante eines Hohlkammerprofils 51 in Fig. 5 dargestellt.

Im Ergebnis erhält man immer ein äußerlich unverändertes PVC-Hohlkammerprofil, in dem im Inneren eine oder mehrere durch Vertikalstege abgegrenzte Hohlkammern durch einen breiten Schaumsteg aus leichtem PVC- oder Acrylat-Schaum mit gleicher oder größerer Querschnittsfläche als die der vorherige Hohlkammer oder durch eine mit den Innenwandungen verschmolzene Schaumfüllung mit einem zentralen vertikalen Schaumschlitz ersetzt worden ist.

Die Größe der zu schäumenden Querschnitte im Inneren der Hohlraumkammerprofile kann weitgehend frei vorbestimmt werden. Die Extrusion mit einem oder auch zwei parallel auf ein Coextrusionswerkzeug 6 am Hauptextruder 2 zuführenden Schaumschmelze-Extrudern 5 kann problemlos aufeinander abgestimmt werden. Die Rahmenprofile können mit unveränderten, vergleichbaren Extrusionsgeschwindigkeiten kalibriert und abgezogen werden, ohne dass weitere technologische Änderungen vorgenommen werden müssen. Damit sind auch Bestandsanlagen zur Hohlkammer-Profilextrusion vergleichsweise leicht und sicher auf die Verfahrensvariante mit partieller Ausschäumung der Kammern umrüstbar.

Neben der Verbesserung des Wärmedurchgangswiderstandes U der Fenster,- Tür- und Flügelrahmen können ein oder mehrere der eingebrachte Schaumstege auch die mechanischen Aufgaben der ersetzten kompakten Vertikalstege übernehmen. Die Verbundfläche zum kompakten Profilrahmen und die Gesamtmasse der Schaumstege sind größer als die der ersetzten dünnen Stege, woraus auch eine insgesamt höhere mechanische Belastbarkeit des gesamten Rahmenprofils folgt.

Die Art der Rezeptur ermöglicht bevorzugt Wärmeleitfähigkeiten von unter 0,031 W/mK.

Die verfahrenstechnischen und stofflichen Gegenstände der Erfindung werden anhand der folgenden Beispiele in ihren gegenseitigen Wechselwirkungen erläutert:

### Beispiel 1:

An einen Einschneckenextruder mit 60 mm Schneckendurchmesser und einem Länge-/Durchmesserverhältnisse der Schnecke von 25 wird anstelle eines Extrusionswerkzeuges eine konische Querschnittsreduzierung als eine Düse installiert, die in einer temperierfähigen Rohrleitung von 12 mm Durchmesser endet. Diese ist von ihrer konstruktiven Auslegung dazu geeignet, die erzeugte Schmelze in ein Hohlkammer-Profilwerkzeug eines parallel angeordneten Hauptextruders zur Rahmenprofilextrusion einzuleiten. Am Ende der Rohrleitung wird ein rechteckiger Austrittsquerschnitt von 1 cm x 2 cm angeordnet, der einer möglichen Vorformkammer im Dorn eines Hohlkammerprofilwerkzeuges entspricht.

Ohne diesen Einschneckenextruder mit einem parallelen Hauptextruder zu koppeln, wird PVC-U-Schaumblendmischung in den Trichter des Extruders aufgegeben, die zu 80 Gew.% aus einem PVC-U mit k-Wert unter 60 besteht und die 8 Gew.% eines handelsüblichen, Acrylat-haltigen Stabilastorpaketes für PVC-Schaumblends und 11,5 Gew. % eines ebenfalls handelsüblichen, 65 Gew.%-igen Microsphären-Masterbatches, und zur Reduzierung der Wandreibung in der Schmelzeförderleitung 0,5 Gew.% eines mittelmolekularen Poly-dimethyl-siloxans enthält.

Das PVC und das Stabilisatorpaket werden vor der Extrusion in einem üblichen Dryblend-Prozess konditioniert und das Poly-dimethyl-siloxan in den Kühlmischer zugegeben. Das granulatförmige Microspheres-Masterbatch wird mit einer Dosiereinrichtung direkt am Extruder in den Einzug am Extruderzylinder zudosiert.

Die Mischung wird bei für die PVC-Schaumextrusion üblichen Extrusionsbedingungen verarbeitet und tritt mit 185 °C Massetemperatur unter Volumenexpansion sowohl in Längsrichtung als auch radial zur Fließrichtung aus der Rechteckdüse aus. Die Schaumstruktur ist so feinzellig, dass sie am Querschnitt mit bloßem Auge nicht erkennbar ist. Nach der Abkühlung des Schaums und einer gleichzeitiger Volumenkontraktion wird ein rechteckiges, gleichmäßig ausgebildetes, festes Profil mit 3,2 cm x 2,7 cm Querschnittsfläche, einer Schaumdichte von 0,21 g/cm³ und relativ glatten Oberflächen erhalten. Die geometrischen Eigenschaften der Profilabschnitte sind so gut, dass sie nach geringfügiger Nachbearbeitung zu einem flächigen Prüfkörper gefügt und einer Wärmeleitfähigkeitsmessung unterzogen werden können. Es wird eine Wärmeleitfähigkeit 'λ' gemäß DIN ISO 10456 von 0,038 W/mK ermittelt.

### Beispiel 2:

Für eine Anlagenkonstellation analog Bsp. 1 wird ein PVC-Schaumblend auf Basis von 78 Gew.% (jeweils berechnet auf die späteren Gesamtmischungsbestandteile) eines PVC-U mit K-Wert 57 mit 8 Gew.% eines handelsüblichen, Acrylat-haltigen Stabilastorpaketes für PVC-Schaumblends im Dryblend-Prozess konditioniert und danach mit 14 Gew.% einer Abmischung, ihrerseits bestehend aus 65 Gew.% handelsüblicher, zu 120 µm bei 180 °C expandierbaren, pulverförmigen Microsphären, 30 Gew.% eines niedrigvikosen, handelsüblichen, für die Konditionierung von PVC zur Herstellung von Folien bestimmten Acrylats und 5 Gew.% eines C18-Säureamid-Wachses, beides jeweils zur Verbesserung der Schmelzefließ- und Dehnfähigkeit, gemischt. Diese PVC-Blend-Pulverzubereitung wird dem 60 mm Einschneckenextruder aufgegeben und bei Zylindertemperaturen von 140 °C bis 180 °C plastiziert und extrudiert.

Die Schmelze tritt mit einer Massetemperatur von 183 °C aus der Rechteckdüse aus und bildet einen nahezu rechteckigen Schaumstrang mit 2,8 cm x 2,3 cm Querschnittsfläche und einer Schaumdichte von 0,19 g/cm³ aus. Die Expansion ist also mehr in Fließrichtung als radial dazu erfolgt. Die Oberfläche weist höhere Rauigkeit als im Beispiel 1 auf, die Wärmeleitfähigkeit korrespondiert mit der niedrigeren Schaumdichte und liegt bei unter 0,05 W/mK, vorzugsweise bei 0,036 W/mK.

### Beispiel 3:

Für eine Anlagenkonstellation analog Bsp. 1 wird ein PVC-Schaumblend auf Basis von 74 Gew.% (jeweils berechnet auf die späteren Gesamtmischungsbestandteile) eines PVC-U mit K-Wert 57 mit 8 Gew.% eines Acrylat-haltigen Stabilisatorpaketes für PVC-Schaumblends im Dryblend-Prozess konditioniert und danach im Kühlmischer mit 18 Gew.% einer Abmischung, ihrerseits bestehend aus 45 Gew.% bei 180 °C zu 120 µm Durchmesser expandierbarer, pulverförmiger Microsphären, 30 Gew.% eines niedrigviskosen für die Konditionierung von PVC zur Herstellung von Folien bestimmten Acrylats, 20 Gew.% Tri-butyl-acetyl-citrat und zusätzlich 5 Gew.% einer thermochemisch reaktiven Treibmittelmischung, wie sie zur Herstellung von extrudierten PVC-Integralschaum-Profilen üblich ist, gemischt. Diese PVC-Blend-Pulverzubereitung wird dem 60 mm Einschneckenextruder aufgegeben und bei Zylindertemperaturen von 140 °C bis 180 °C plastiziert und extrudiert. Die Schmelze tritt mit einer Massetemperatur von 180 °C aus der Rechteckdüse aus und bildet einen Schaumstrang mit 2,8 cm x 2,3 cm Querschnittsfläche und einer Schaumdichte von 0,15 g/cm³ aus. Die Oberfläche weist ebenfalls höhere Rauigkeit als im Beispiel 1 auf, die Wärmeleitfähigkeit korrespondiert ebenfalls mit der niedrigeren Schaumdichte und liegt bei 0,031 W/mK.

Die vorgenannten Einzelkomponenten dieses und der weiteren vorgenannten oder nachfolgenden Beispiele sind handelsüblich. Beispielsweise können die Mikrosphären der vorbeschriebenen Art der Produktklasse "Expancel" der Firma Akzo Nobel bezogen werden.

### Beispiel 4:

Für eine Anlagenkonstellation analog Bsp. 1 werden 43 Gew.% (jeweils berechnet auf die späteren Gesamtmischungsbestandteile) eines handelsüblichen hochmolekularen PMMA, wie es zur Modifikation von PVC-U-Schaumblends üblich ist, und 46 Gew.% eines handelsüblichen, für die Konditionierung von PVC zur Herstellung von Folien bestimmten mittelmolekularen Acrylats, mit 10 Gew.% handelsüblicher, bei 190 °C zu 120 µm Durchmesser expandierbarer, pulverförmiger Microspheres, gemischt. Als äußeres Gleitmittel wird 1 Gew.% Dimethyl-, Methyl(propyl (polyethylenpolypropylen-oxid)acetat)-Siloxan verwendet. Diese Acrylatpulver-Microsphären-Mischung wird dem 60 mm Einschneckenextruder aufgegeben und bei Zylindertemperaturen von 140 °C bis 190 °C plastiziert und extrudiert. Die Schmelze tritt mit einer Massetemperatur von 190 °C aus der Rechteckdüse aus und bildet einen Schaumstrang mit 3,0 cm x 2,5 cm Querschnittsfläche und einer Schaumdichte von 0,11 g/cm³ aus. Die Oberfläche weist ebenfalls höhere Rauigkeit als im Beispiel 1 auf, die Wärmeleitfähigkeit korrespondiert ebenfalls mit der niedrigeren Schaumdichte und liegt bei 0,034 W/mK.

### Beispiel 5:

Für eine Anlagenkonstellation ähnlich wie bei Bsp. 1, allerdings mit einem gegenläufigen Doppelschneckenextruder mit 45 mm Schneckendurchmesser anstelle des Einschneckenextruders, wird ein PVC-Schaumblend auf Basis von 78 Gew.% (jeweils berechnet auf die späteren Gesamtmischungsbestandteile) eines PVC-U mit K-Wert 57 mit 8 Gew.% eines handelsüblichen, Acrylat-haltigen Stabilisatorpaketes für PVC-Schaumblends im Dryblend-Prozess konditioniert und danach mit 14 Gew.% einer Abmischung, ihrerseits bestehend aus 65 Gew.% handelsüblicher, bei 180°C zu 120 µm Durchmesser expandierbarer, pulverförmiger Microsphären, 30 Gew.% eines niedrigvikosen, handelsüblichen, für die Konditionierung von PVC zur Herstellung von Folien bestimmten Acrylats und 5 Gew.% eines C18-Säureamid-Wachses, beides jeweils zur Verbesserung der Schmelzefließ- und Dehnfähigkeit, gemischt. Diese PVC-Blend-Pulverzubereitung wird einem 45 mm Doppelschneckenextruder aufgegeben und bei Zylindertemperaturen von 150 °C bis 190 °C plastiziert und extrudiert. Die Schmelze tritt mit einer Massetemperatur von 183 °C aus der Rechteckdüse aus und bildet einen nahezu rechteckigen Schaumstrang mit 2,8 cm x 2,4 cm Querschnittsfläche und einer Schaumdichte von 0,18 g/cm³ aus. Die Oberfläche weist wie bei Bsp. 1 eine relativ geringe Rauigkeit auf, die Wärmeleitfähigkeit korrespondiert mit der niedrigeren Schaumdichte und liegt bei 0,040 W/mK.

### Beispiel 6:

Für eine Anlagenkonstellation analog Bsp. 1 werden als Hauptkomponente 47 Gew. % eines mittels üblicher PVC-Pulverblendtechnologie im Heiz- und Kühlmischer vorgefertigten PVC-Schaumblends auf Basis eines PVC mit K-Wert 57 verwendet, um in einem nachgelagerten Mischprozess zusammen mit einer Acrylat-Pulvermischung, bestehend aus 20 Gew. % (alle Komponenten berechnet auf die späteren Gesamtmischungsbestandteile) eines handelsüblichen hochmolekularen PMMA, wie es zur Modifikation von PVC-U-Schaumblends üblich ist, und 20 Gew.% eines handelsüblichen, für die Konditionierung von PVC- Folien bestimmten, mittelmolekularen Acrylats, mit 10 Gew.% handelsüblicher, bei 190 °C zu 120 µm Durchmesser expandierbarer, pulverförmiger Mikrosphären, gemischt zu werden. Zur Verbesserung der Plastizierbarkeit bei relativ niedrigen Zylindertemperaturen im Extrusionsprozess und zur Verbesserung der Fließfähigkeit der Schmelze wird 1 Gew.% 1-Methoxy-2-(2-methoxy-ethoxy-methoxy)ethan zugemischt, das von den Pulverkomponenten, ohne Einbuße der Fließ- und Dosierfähigkeit der Pulvermischung, adsorbiert wird. Als weiteres Expansionsmittel werden 2 Gew.% einer Natrium-hydrogen-carbonat- Zubereitung mit einer breiten Zerfallscharakteristik von 140 °C bis 200 °C zugemischt. Diese PVC-Acrylatpulver-Expansionsmittel-Mischung wird dem 60 mm Einschneckenextruder aufgegeben und bei Zylindertemperaturen von 140 °C bis 190 °C plastiziert und extrudiert. Die Schmelze tritt mit einer Massetemperatur von 183 °C aus der Rechteckdüse aus und bildet einen stabilen Schaumstrang mit 3,5 cm x 2,8 cm Querschnittsfläche und einer Schaumdichte von 0,08 g/cm³ nach dem Erkalten aus. Die geschlossenen Profiloberflächen weisen nur geringfügige Schmelzeanhaftungen aus dem Extrusionswerkzeug auf. Der Schaum ist relativ fest. Im Querschnitt erkennt man eine sehr gleichmäßige, vom thermochemischen Expansionsmittel herrührende Schaumstruktur mit < 1 mm Zellgrößen. Die mikroskopisch sichtbare Mikrosphären-Schaumstruktur ist in die Zellwände der übergeordneten Schaumstruktur eingelagert. Die Wärmeleitfähigkeit korrespondiert ebenfalls mit der niedrigeren Schaumdichte und liegt bei 0,031 W/mK.

### Beispiel 7

Eine Anlagenkonstellation analog der Beispiele 1 bis 6 mit einem 60 mm-Einschneckenextruder und der angeschlossenen, temperierfähigen Schaumschmelzeleitung mit der rechteckig ausgebildeten Vorformkammer, wird am und im Extrusionswerkzeug eines gegenläufigen Doppelschneckenextruders zur Herstellung eines üblichen Fensterrahmenprofils so installiert, dass die Vorformdüse aus dem Dorn zur Ausbildung einer zentralen Hohlkammer ragt. Die begrenzenden Stege zur Ausbildung der Kammer wurden entfernt, so dass sich eine größere Hohlkammer ergibt, die durch die Stege zur Ausbildung der inneren und äußeren Konvektionskammern des Fensterprofils begrenzt wird. In diese Hohlkammer wird bei laufender Extrusion des äußeren kompakten Fensterprofils eine Schaumschmelze analog der Zusammensetzung von Beispiel 3 eingeführt. Die Temperaturen am Zylinder des Schaumextruders werden auf ein Temperaturprofil analog Beispiel 3 eingestellt. Die Massetemperatur in der Schmelzezuführung vor dem Extrusionswerkzeug beträgt dabei 150 °C. Das Fensterprofil-Werkzeug ist auf 190 °C temperiert. Die Temperatur der in das Werkzeug und anschließend in die Hohlkammer eingeführten schäumfähigen Schmelze aus dem Einschneckenextruder steigt während der Passage auf den für die Microspheres-Expansion optimalen Temperaturbereich von über 185 °C an, wodurch nach Verlassen der Vorformkammer am Ende der Schaumschmelzeleitung das Aufschäumen im Inneren der großen Hohlkammer zu der bereits in Beispiel 3 erreichten Schaumdichte führt. Da die Höhe des rechteckigen Schaumquerschnitts die Höhe der Hohlkammer übersteigt, legt sich das Schaumprofil an der oberen und unteren Innenfläche des Hohlprofils an und geht eine feste Verbindung mit dem kompakten PVC des äußeren Rahmens durch Verschmelzen ein. Diese Verbindung bleibt auch nach Erkalten und Kontraktion des Schaums erhalten, die zu Lasten der freiliegenden Längsseiten des so gebildeten breiten Schaumstegs in der Hohlkammer gehen.

Der Leichtschaumsteg aus PVC mit einer Dichte von 0,15 g/cm³ im Inneren des Fensterprofils liegt über eine Breite von 2,5 cm an den oberen und unteren Innenflächen der partiell ausgeschäumten Hohlkammer an. Die Breite des konvex ausgebildeten Schaumstegs beträgt in der mittleren Höhe ca. 3 cm. Damit ist ein Schaumquerschnitt in das Innere des Fensterprofilrahmens inline extrudiert worden, der größer ist als die vormals an dieser Stelle angeordnete, mit vertikalen Stegen begrenzte Kammer.

### Beispiel 8

Eine Anlagenkonstellation analog der Beispiele 1 bis 6 mit einem 60 mm-Einschneckenextruder und der angeschlossenen, temperierfähigen Schaumschmelzeleitung mit der rechteckig ausgebildeten Vorformkammer, wird am und im Extrusionswerkzeug eines gegenläufigen Doppelschneckenextruders zur Herstellung eines üblichen Fensterrahmenprofils so installiert, dass die Vorformdüse aus dem Dorn zur Ausbildung einer zentralen Hohlkammer ragt. Die begrenzenden Stege zur Ausbildung der Kammer wurden auf 50 % ihrer ursprünglichen Dicke von 1 mm, also auf 0,5 mm, reduziert und im Bereich ihrer Anbindung an die inneren Ober-und Unterseiten des äußeren Rahmenprofils radial verbeitert. Durch die geringere Wandstärke kann ein Volumenausgleich bei Schaumexpansion und/oder -kontraktion vorteilhaft ermöglicht werden. Es ergibt sich eine Hohlkammer mit dünnen Vertikalstegen und stärkerer Anbindung an das tragende Außenprofil. In diese Hohlkammer wird bei laufender Extrusion des äußeren kompakten Fensterprofils eine Schaumschmelze analog der Zusammensetzung von Beispiel 3 eingeführt. Die Temperaturen am Zylinder des Schaumextruders werden auf ein Temperaturprofil analog Beispiel 3 eingestellt. Die Massetemperatur in der Schmelzezuführung vor dem Extrusionswerkzeug beträgt dabei 150 °C. Das Fensterprofil-Werkzeug ist auf 190 °C temperiert. Die Temperatur der in das Werkzeug und anschließend in die Hohlkammer eingeführten schäumfähigen Schmelze aus dem Einschneckenextruder steigt während der Passage auf den für die Microspheres-Expansion optimalen Temperaturbereich von über 185 °C an, wodurch nach Verlassen der Vorformkammer am Ende der Schaumschmelzeleitung das Aufschäumen im Inneren der Hohlkammer mit den dünnen, ebenfalls noch schmelzeförmigen und dehnfähigen Vertikalstegen zu der bereits in Beispiel 3 erreichten Schaumdichte führt. Da die Querschnittsfläche des rechteckigen Schaumquerschnitts die der Hohlkammer übersteigt, legt sich das Schaumprofil alle Innenfläche des Hohlprofils an und geht eine feste Verbindung mit dem kompakten PVC des äußeren Rahmens und der dünnen Vertikalstege durch Verschmelzen ein. Die Vertikalstege werden durch den Expansionsdruck der Schaumschmelze zunächst konvex nach außen in die benachbarten Hohlkammern gewölbt, anschließend während der Erkaltung und Kontraktion des Schaums zu konkaven Querschnitten ohne Ablösung vom Schaum zurück gezogen. Die Schmelzverbindungen zu den kompakten Begrenzungsflächen um den inneren Schaumquerschnitt herum bleiben auch nach Erkalten und Kontraktion des Schaums erhalten.

Der Leichtschaumsteg aus PVC mit dünnwandigen, verformten vertikalen Stegbegrenzungen aus Kompakt-PVC besitzt eine Dichte von 0,17 g/cm³. Er liegt über eine Breite von 2,5 cm an den oberen und unteren Innenflächen der partiell ausgeschäumten Hohlkammer an. Die Breite zwischen den leicht konkav ausgebildeten Vertikalseiten beträgt in der mittleren Höhe ca. 2,2 cm. Damit ist ein Schaumquerschnitt in das Innere des Fensterprofilrahmens inline extrudiert worden, der ungefähr die gleiche Fläche wie die vormals an dieser Stelle angeordnete, mit vertikalen Stegen begrenzte Hohlkammer.

### Beispiel 9

Eine Anlagenkonstellation analog der Beispiele 1 bis 6 mit einem 60 mm-Einschneckenextruder und der angeschlossenen, temperierfähigen Schaumschmelzeleitung mit der rechteckig ausgebildeten Vorformkammer, wird am und im Extrusionswerkzeug eines gegenläufigen Doppelschneckenextruders zur Herstellung eines üblichen Fensterrahmenprofils so installiert, dass die Vorformdüse aus dem Dorn zur Ausbildung einer zentralen Hohlkammer ohne vertikale Trennstege heraus ragt.

In die Vorformkammer wird vertikal ein linsenförmiger Verdrängerkörper installiert, den die schäumfähige Schmelze aus dem Coextruder 5 vor ihrer Expansion umfließen muss.

Die Temperaturen am Zylinder des Schaumextruders werden auf ein Temperaturprofil analog Beispiel 3 eingestellt. Die Massetemperatur in der Schmelzezuführung vor dem Extrusionswerkzeug beträgt dabei 150 °C. Das Fensterprofil-Werkzeug ist auf 190 °C temperiert. Die Temperatur der in das Werkzeug und anschließend in die Hohlkammer eingeführten schäumfähigen Schmelze aus dem Einschneckenextruder steigt während der Passage auf den für die Microspheres-Expansion optimalen Temperaturbereich von über 185 °C an, wodurch nach Verlassen der Vorformkammer am Ende der Schaumschmelzeleitung das Aufschäumen im Inneren der Hohlkammer nach außen in Richtung der Innenwände des kompakten Außenprofils und nach innen in den vom Verdrängerkörper gebildeten Hohlraum erfolgt

Der Verdrängerkörper bildet einen Hohlraum im Schaumquerschnitt aus, der partiell zugeschäumt wird, aber eine kleine schlitzförmige Öffnung, und damit den Zutritt des Atmosphärendruckes, hinterlässt. Die nach außen expandierenden Schaumschmelzeanteile verschmelzen mit den Innenseiten des kompakten Außenprofils. Der Volumenschwund beim Erstarren des Schaums erfolgt unter Vergrößerung des inneren Schlitzhohlraumes durch einströmende Umgebungsluft, ohne dass es zur Ablösung des Schaums von den Innenflächen des Außenprofils kommt.

Die Leichtschaumfüllung aus PVC besitzt eine Dichte von 0,15 g/cm³. Sie liegt über den gesamten Querschnitt an den Innenflächen der Hohlkammer an, die damit fast komplett zugeschäumt ist. In der Mitte weist sie eine schmale, linsenförmige Schlitzöffnung auf, die an der breitesten Stelle ca. 3mm breit ist.

### Beispiel 10

Abfälle aus dem An- und Abfahrprozess der Profilextrusion mit inneren Schaumsteg gemäß dem vorgenannten Anwendungsbeispiel und Verschnitte aus der damit erfolgten Fensterrahmenherstellung werden mittels Schneidmühle zerkleinert und einem Extrusionsprozess zur Herstellung von PVC-U-Profilen zu Anteilen bis zu 50 % zugeführt, wie es bei Profilabfällen aus der Fensterherstellung ohne geschäumte Profilanteile ebenfalls üblich ist. Die Verarbeitung verläuft ohne bemerkbaren Unterschied zu den Profilabfällen ohne Schaumanteil bei ebenfalls gleichbleibender Qualität der extrudierten Profile. Damit bestätigt sich die problemlose Recyclingfähigkeit der nach dem beschriebenen Verfahren hergestellten Profile mit inneren Schaumsteg ohne zusätzliche Aufwände und Qualitätseinbußen an den Profilen aus recycelten Abfällen.

Die Freischäume gemäß der Beispiele 1 bis 6 können in analoger Weise gemäß der in den Anwendungsbeispielen 7 bis 9 beschriebenen Verfahrensweise in Hohlkammerprofile aus PVC-U für Tür-, Fenster- und Flügelrahmen inline bei der Profilherstellung eingebracht werden. Damit wird die Aufgabenstellung der Erfindung erfüllt und eine neue, hochproduktive und kostengünstige Verfahrensweise zur Herstellung von Fenstern und Türen mit verbessertem Wärmedurchgangswiderstand U bei gleichzeitig unveränderter Recyclingfähigkeit von Fertigungsabfällen und Altfenstern geschaffen.

Aufgrund der vorgenannten Werte erkennt man, dass die Wärmeleitfähigkeit im beanspruchten Bereich hinreichend gut für die Anwendung in Fenstern, Türen und Fassaden ist.

Fig. 3 zeigt ein Hohlprofil 31, welches ebenfalls einen Hohlraum bzw. eine Hohlkammer 34 aufweist, welcher mit Schaum 32 befüllt ist und welcher durch massive Kunststoffwände 33 begrenzt ist. Auch hier ist ein Übergangsbereich 35 vorgesehen, in welchem z.B. der Schaum und die Profilwand miteinander verschmolzen sind. Dies ist im Rahmen der vorliegenden Erfindung als nahtfreier Übergang zu verstehen, wobei sich nahtfrei auf die Abwesenheit eines zusätzlichen Adhäsionsmittels und damit einer Klebenaht bezieht. Diese Definition gilt auch für die Variante der Fig. 2.

Dabei kann der Schaum vorzugsweise bereichsweise ohne Stoffschluss an einigen der Profilwände anliegen oder von diesen beabstandet sein und mit einigen der Profilwände stoffschlüssig verbunden sein. Konkret ist der Schaum der Fig. 3 als Schaumsteg ausgebildet.

Im Unterschied zu Fig. 2 ist der Hohlraum 34 bevorzugt nur teilgefüllt mit Schaum 32, so dass ein Freiraum bzw. ein unausgefüllter Bereich 36 entsteht ohne dass zwischen dem Schaum und dem Freiraum eine Trennwand vorliegt.

Neben den in Fig. 2 und 3 dargestellten Ausführungsvarianten kann der Schaum auch an einer oberen und unteren Rahmeninnenfläche anliegen und beidseitig durch Stege, z.B. Isolierstege, begrenzt sein.

Fig. 4 zeigt eine Ausführungsvariante mit einem Freiraum 40 zum Ausgleich von Volumenänderungen.

Fig. 5 zeigt eine Ausführungsvariante in welcher zumindest die schaumberührenden Ecken der Hohlkammer einen Radius von 3-10 Millimeter, vorzugsweise 4-6 Millimeter, aufweisen. Die Eckbruchfestigkeit wird dadurch erhöht und der Radius ermöglicht umfassendere Ausfüllung und Anhaftung des Schaumes innerhalb der Hohlkammer.

Fig. 5b zeigt das vorherige Profil mit einem optionalen Freiraum zum Volumenausgleich bei Expansion und/oder Kontraktion des Schaumes.

### Bezugszeichen

- 1: Vorrichtung
- 2: Hauptextruder
- 3: Erster Ausgangsstoff
- 4: Zweiter Ausgangsstoff
- 5: Schaumextruder
- 6: Düse
- 7: Ausnehmung bzw. Formkammer
- 8: Extrudat
- 9: Schmelzeleitung
- 10: Mikrosphären
- 11: Schaum
- 12: Hohlkammerprofil
- 13: Extrusionskanal
- 14: Verdrängerkörper

- 21: Hohlkammerprofil
- 22: Schaum
- 23: Profilwand
- 24: Hohlkammer
- 25: Übergangsbereich

- 31: Hohlkammerprofil
- 32: Schaum
- 33: Profilwand
- 34: Hohlkammer
- 35: Übergangsbereich
- 36: Freiraum bzw. unausgefüllter Bereich
- 40: Freiraum
- 41: Hohlkammerprofil
- 51: Hohlkammerprofil

## Patentansprüche

1. Hohlkammerprofil (12, 21, 31, 41, 51), insbesondere für den Fassaden-, Fenster- und/oder Türenbau sowie für Bauteile im Bereich des Sonnenschutzes, umfassend PVC-haltige Profilwände (23, 33), welche zumindest eine Hohlkammer (24, 34) begrenzen, wobei die Hohlkammer (24, 34) zur Erhöhung des Wärmedurchgangswiderstandes mit einem PVC und/oder Polyacrylat-haltigen Schaum (11, 22, 32) zumindest teilweise gefüllt ist **dadurch gekennzeichnet, dass** der Schaum (22, 32) als Schäumungsmittel thermisch-expandierbare Mikrosphären (10), wobei die Mikrosphären (10) zu einem Anteil von weniger als 20 Gew.% im Gemisch enthalten sind.

2. Hohlkammerprofil nach Anspruch 1, **dadurch gekennzeichnet, dass** die Mikrosphären (10) zu einem Anteil zwischen 3 Gew.% und 15 Gew.%, bevorzugt zwischen 5 Gew.% und 12 Gew.%, im Gemisch enthalten sind.

3. Hohlkammerprofil nach Anspruch 1 oder 2, **dadurch gekennzeichnet, dass** die Hohlkammer (24, 34) partiell mit dem Schaum gefüllt ist.

4. Hohlkammerprofil nach einem der vorhergehenden Ansprüche, **dadurch gekennzeichnet, dass** das Hohlkammerprofil (12, 21, 31, 41, 51) im Querschnitt einen ersten Teilbereich aufweist, in welchem die PVC-haltigen Profilwände (23, 33) stoffschlüssig, insbesondere nahtlos, mit dem Schaum (11, 22, 32) verbunden sind und einen zweiten Teilbereich in welchem der Schaum (11, 22, 32) ohne Stoffschluss an einer PVC-haltigen Profilwand (23, 33) der Hohlkammer (24, 34) anliegt oder von dieser beabstandet ist.

5. Hohlkammerprofil nach einem der vorhergehenden Ansprüche, **dadurch gekennzeichnet, dass** der Schaum (32) in den Eckbereichen der Hohlkammer (34) stoffschlüssig mit den Profilwänden verbunden ist und in Teilbereichen zwischen den jeweiligen Eckbereichen von den Profilwänden beabstandet ist.

6. Hohlkammerprofil nach einem der vorhergehenden Ansprüche, **dadurch gekennzeichnet, dass** der Schaum (32) einen Freiraum (40) zum Volumenausgleich umschließt.

7. Hohlkammerprofil nach einem der vorhergehenden Ansprüche, **dadurch gekennzeichnet, dass** zumindest die schaumberührenden Ecken der Hohlkammer einen Radius von 3-10 Millimeter, vorzugsweise 4-6 Millimeter, aufweisen.

8. Hohlkammerprofil nach einem der vorhergehenden Ansprüche, **dadurch gekennzeichnet, dass** der Schaum (11, 22, 32) als Leichtschaum mit einer Dichte zwischen 0,08 g/cm³ und 0,3 g/cm³, bevorzugt zwischen 0,1 g/cm³ und 0,25 g/cm ausgebildet ist.

9. Verfahren zum Herstellen eines Hohlkammerprofils (12, 21, 31, 41, 51) nach einem der vorhergehenden Ansprüche, wobei im Rahmen einer Coextrusion der Schaum (11, 22, 32) und die Profilwände (23, 33) des Hohlkammerprofils (12, 21, 31) ausgebildet werden, **dadurch gekennzeichnet, dass** zur Ausbildung der Profilwände (23, 33) ein PVC-haltiger erster Ausgangsstoff (3) verwendet wird und dass zur Ausbildung des Schaumes ein Gemisch, insbesondere eine schäumfähige Polymerschmelze, verwendet wird, welches zumindest einen PVC- oder Polyacrylathaltigen zweiten Ausgangsstoff (4) als Matrixpolymer und Mikrosphären (10) als Schäumungsmittel umfasst, wobei die Mikrosphären (10) zu einem Anteil von weniger als 20 Gew.% enthalten sind.

10. Verfahren nach Anspruch 9, **dadurch gekennzeichnet, dass**
i) in einem beheizbaren Hauptextruder (2) der PVC-haltige erste Ausgangsstoff (3) im festen Zustand eingefüllt wird;
ii) der PVC-haltige erste Ausgangsstoff (3) während der Förderung mittels einer Förderschnecke des Hauptextruders (2) in Richtung einer Düse (6) aufgeschmolzen und komprimiert wird;
iii) der aufgeschmolzene PVC-haltige erste Ausgangsstoff (3) durch die Düse (6) zu einem Hohlkammerprofil (12, 21, 32) ausgepresst wird;
iv) ein PVC- oder Polyacrylathaltiger zweiter Ausgangsstoff (4) sowie die Mikrosphären (10) in einen Schaumextruder (5) eingefüllt und zu einer schäumbaren Schmelze geschmolzen wird;
v) die schäumbare Schmelze in Richtung der Düse (6) gefördert wird;
vi) das schäumbare Schmelze in eine Formkammer (7) der Düse (6) gefördert wird, in welcher ein teilweises oder vollständiges Aufschäumen der schäumbaren Schmelze unter Ausbildung des Schaumes erfolgt;
vii) Ausgabe des Schaumes in das Innere des Hohlkammer unter Ausbildung einer zumindest bereichsweisen stoffschlüssigen Verbindung mit den Profilwänden des Hohlkammerprofils (12, 21, 31, 41, 51).

11. Verfahren nach Anspruch 9 oder 10, **dadurch gekennzeichnet, dass** die maximale Expansion dieser Mikrosphären (10) zwischen 180 °C und 200 °C liegt.

12. Verfahren nach einem der vorhergehenden Ansprüche, **dadurch gekennzeichnet, dass** der mittlere Durchmesser der Mikrosphären (10) bei maximaler Expansion durchschnittlich zwischen 80 µm und 140 µm, bevorzugt zwischen 100 µm und 130 µm beträgt.

13. Verfahren nach einem der vorhergehenden Ansprüche, **dadurch gekennzeichnet, dass** die schäumfähige Schmelze ein thermochemisch-reagierenden Treibmittels vorzugsweise ein Hydrogencarbonat, insbesondere ein Natriumhydrogencarbonat, einen Ester einer organischen Säure, insbesondere einen Zitronensäureester, und/oder ein modifiziertes Azo-di-carbonsäure-di-amid (ADC) aufweist.

14. Verfahren nach einem der vorhergehenden Ansprüche, **dadurch gekennzeichnet, dass** das Gemisch zu 0,5 % bis 5 Gew.%, bevorzugt 1% bis 3 Gew.%, des thermochemisch-reagierenden Treibmittels oder eines thermochemisch-reagierenden Treibmittelgemisches aufweist.

15. Verfahren nach einem der vorhergehenden Ansprüche, **dadurch gekennzeichnet, dass** das Gemisch zudem einen Weichmacher, vorzugsweise ein Phthalat, Adipat und/oder Citrat und/oder ein Gleitmitteladditiv, vorzugsweise ein Siloxan, Stearat, Carboxylat und/oder ein Olefin, insbesondere ein Olefin-Copolymer, zur Einstellung der Schmelzviskosität und zur Dehnbarkeit des Gemisches aufweist.

16. Verfahren nach einem der vorhergehenden Ansprüche, **dadurch gekennzeichnet, dass** der erste und der zweite Ausgangsstoff (3, 4) jeweils zumindest zu 80 Gew.%, vorzugsweise zu 95 Gew.% Hart-PVC gebildet sind.

17. Verfahren nach einem der vorhergehenden Ansprüche, **dadurch gekennzeichnet, dass** das Coextrusionsverfahren die Düse (6) entlang einer Extrudat-Austrittsseite, an welcher die Profilwände (23, 33) ausgebildet werden, die Formkammer (7) aufweist, in welcher der Schaum (11, 22, 32) gebildet wird, so dass in Austrittsrichtung der Schaum (11, 22, 32) vor den Profilwänden (23, 33) aus der Düse (6) ausgegeben wird.

18. Verfahren nach einem der vorhergehenden Ansprüche, **dadurch gekennzeichnet, dass** die Plastifizierung und Homogenisierung des zweiten Ausgangsstoffes (4) mit den Mikrosphären (10) unter Ausbildung der schäumfähigen Schmelze in dem zum Hauptextruder (2) benachbart angeordneten Schaumextruder (5), erfolgt und dass die Zuführung der schäumfähigen Schmelze in die Hohlkammer (24, 34) des Hohlkammerprofils (12, 21, 31) durch eine temperierte Schmelzeleitung (9) in die Düse (6) des Hauptextruders (2) erfolgt und dass diese Schmelzeleitung (9) in der Formkammer (7) für das schäumfähige Gemisch endet, wobei die Formkammer (7) die Querschnittsgeometrie der auszuschäumenden Hohlkammer (24, 34) oder einer vorgegebenen Querschnittsgeometrie eines Schaumkörpers zur Ausgabe in die Hohlkammer (24, 34) verkleinert aufweist.

19. Verfahren nach einem der vorhergehenden Ansprüche, **dadurch gekennzeichnet, dass** die die Querschnittsgeometrie der Hohlkammer (24, 34) oder des Schaumkörpers abbildende Formkammer (7) am Ende der Schmelzeleitung (9) einen hohlraumbildenden Verdrängerkörper (14) besitzt, den das schaumfähige Gemisch unmittelbar vor dem Schäumprozess umfließt und der das Gemisch dabei teilt, so dass die zur Dehnung erforderlichen maximalen inneren Fließwege im Schaumschmelzequerschnitt während des Expandierens durch Aufteilung des Gemisches in Form eines Schaumschmelzestromes verkürzt werden.

20. Verfahren nach einem der vorhergehenden Ansprüche, **dadurch gekennzeichnet, dass** der in der Formkammer (7) vorgeformte Schaum frei in die zur Extrudat-Austrittsseite hin offene Hohlkammer (34) des Hohlkammerprofils eintritt und sich dabei zumindest an zwei vorzugsweise gegenüberliegende Innenflächen zweier die Hohlkammer (34) begrenzende Profilwände (33) anlegt und mit diesen unlösbar stoffschlüssig verbindet, insbesondere verschmilzt, und an mindestens einer Seite der Hohlkammer (34) ohne Begrenzung bleibt, so dass eine Volumenausgleich entlang dieser Seite erfolgen kann.

21. Verfahren nach einem der vorhergehenden Ansprüche, **dadurch gekennzeichnet, dass** das Gemisch eines oder mehrere Additive in Form von Weichmacher, insbesondere zumindest ein Ester einer organischen Säuren wie Phthalsäure, vorzugsweise Di-iso-nonyl-phthalat, Zitronensäure, vorzugsweise Tri-butyl-acetyl-citrat und/oder der Benzoesäure und/oder ein Additiv als ein kurzkettiges Polymethylmethacrylat und/oder ein Additiv als eine PVC-partiell-lösende Substanz, vorzugsweise 1-Methoxy-2-(2-methoxy-ethoxy-methoxy)ethan, aufweist.

22. Verfahren nach Anspruch 21, **dadurch gekennzeichnet, dass** dem Gemisch zumindest ein Additiv zu Anteilen von 2 bis 5 Gew.%, bezogen auf das schaumfähige Gemisch, zugesetzt wird.

23. Verfahren nach einem der vorhergehenden Ansprüche, **dadurch gekennzeichnet, dass** dem Gemisch ein weiteres Additiv, vorzugsweise als Gleitmittel in Form eines Wachses auf Ethylen-, Ethylen-Copolymer- und/oder Propylen-Basis und/oder auf Basis von eines Amidesters von Kohlenwasserstoffsäuren mit zehn und mehr C-Atomen in der Hauptkette und/oder auf Basis einer organischen Silikonverbindungen, vorzugsweise eines Poly-di-methyl-siloxans und/oder eines Dimethylsiloxans, insbesondere eines Dimethyl-Methyl(propyl(polyethylenpolypropylen-oxid)acetat)-Siloxans zugesetzt wird.

24. Verfahren nach einem der vorhergehenden Ansprüche, **dadurch gekennzeichnet, dass** dem Gemisch weitere Additiv zu Anteilen von 0,1 bis 1 Gew.%, bezogen auf das schaumfähige Gemisch, zugesetzt werden.

25. Vorrichtung (1) zur Ausführung des Verfahrens nach einem der vorhergehenden Ansprüche, wobei die Vorrichtung (1) einen Hauptextruder (2) zur Ausbildung eines Hohlkammerprofils (12, 21, 31) und einen Schaumextruder (5) aufweist, **dadurch gekennzeichnet, dass** die Vorrichtung (1) eine Düse (6) aufweist mit einer Formkammer (7) wobei eine Schmelzeleitung (9) vom Schaumextruder (5) in die Formkammer (7) führt, wo sie in einer Ausgabeöffnung mündet und wobei die Vorrichtung (1) Extrusionskanäle (13) aufweist, welche sich vom Hauptextruder (2) in die Düse (6) erstrecken, wobei die Extrusionskanäle (13) Ausgabeöffnungen aufweisen zur Extrusion eines Hohlkammerprofils (12, 21, 31) in der Düse (6), wobei die Ausgabeöffnungen der Extrusionskanäle (13) in Extrusionsrichtung der Ausgabeöffnung der Schmelzeleitung (9) nachgeordnet sind.

26. Vorrichtung nach Anspruch 25, **dadurch gekennzeichnet, dass** die Vorrichtung (1) zumindest zwei Betriebsmodi aufweist, wobei in einem ersten der beiden Betriebsmodi ein ungeschäumtes Hohlprofil herstellbar ist und wobei in einem zweiten der beiden Betriebsmodi ein teilweise oder vollständig ausgeschäumtes Hohlprofil (12, 21, 31) gemäß einem der vorhergehenden Ansprüche herstellbar ist.
